# EUROPÄISCHE PATENTSCHRIFT

(11) **EP 2 898 131 B1**
(45) Veröffentlichungstag und Bekanntmachung des Hinweises auf die Patenterteilung: **09.11.2016**
(21) Anmeldenummer: 13766516.2
(22) Anmeldetag: 23.09.2013
(51) Int. Cl.: D05B 91/12, A47B 97/00

(54) **VERFAHREN UND BEHÄLTER ZUR ÜBERPRÜFUNG, OB SÄMTLICHE BRUCHSTÜCKE EINER GEBROCHENEN NADEL VORHANDEN SIND**
METHOD AND CONTAINER FOR CHECKING IF ALL THE FRAGMENTS OF A BROKEN NEEDLE HAVE BEEN COLLECTED
PROCÉDÉ ET RÉCIPIENT POUR CONTRÔLER QUE TOUS LES FRAGMENTS D'UNE AIGUILLE BRISÉE ONT ÉTÉ COLLECTÉS

(30) Priorität: 21.09.2012 EP 12185390
(43) Veröffentlichungstag der Anmeldung: 29.07.2015
(73) Patentinhaber: Groz-Beckert KG, 72458 Albstadt (DE)
(72) Erfinder: SCHMIDT, Reiner, 72459 Albstadt (DE); GUNASEKERA, Stanley Tarique, 72459 Albstadt (DE)
(74) Vertreter: Rüger, Barthelt & Abel
(86) Internationale Anmeldenummer: PCT/EP2013/069733
(87) Internationale Veröffentlichungsnummer: WO 2014/044847

(56) Entgegenhaltungen:
- FR-A3- 2 557 438
- FR-A5- 2 176 339
- IT-B- 1 225 589
- US-A- 3 982 631
- US-A- 4 796 780
- US-A1- 2006 076 744
- US-A1- 2011 068 562

## Beschreibung

Bei der vorliegenden Erfindung geht es um ein Verfahren zur Überprüfung, ob sämtliche Bruchstücke einer gebrochenen Nadel in einem Behälter vorhanden sind, Behälter zur Durchführung des Verfahrens sowie um die Verwendung dieses Behälters in einem Wagen.

US 3 982 631 A beschreibt einen Behälter in Form einer Schachtel mit einer verschiebbaren Lade und einer die Lade umschließenden Abdeckung. Im Inneren ist ein schwenkbar gelagerter Magnet angeordnet, der beim Öffnen des Behälters in eine geneigte Position schwenkt, so dass am Magneten gehaltene magnetisierbare Nadeln nach oben aus dem Behälter herausragen.

Aus FR 2 557 438 A3 ist ein Wagen mit verschiedenen Schubfächern und einer schwenkbaren Klappe bekannt, an der ein Abfallbehälter befestigt ist, so dass der Abfallbehälter beim Schwenken der Klappe mitschwenkt.

Verfahren zur Qualitätssicherung beim Nähen eines Textilteils, beispielsweise eines Kleidungsstücks sind bekannt. Die Erfindung betrifft im Speziellen ein Verfahren zur Überprüfung, ob sämtliche Bruchstücke einer gebrochenen Nadel in einem Behälter vorhanden sind und den Behälter, der bei dem erfindungsgemäßen Verfahren verwendet wird. Ferner betrifft die Erfindung auch einen Wagen, der es ermöglicht, einen Nadeltausch einer beschädigten, verschlissenen oder gebrochenen Nadel gegen eine neue Ersatznadel möglichst schnell und unkompliziert zu bewerkstelligen. Neben dem Behälter sind in dem Wagen üblicherweise weitere Utensilien enthalten, die zur Vereinfachung des Verfahrens dienen. Beim Nähen von Textilteilen durchläuft ein textiles Werkstück sequenziell mehrere Arbeitsstationen und wird nach und nach fertig gestellt. Der Herstellungsprozess wird unterbrochen, wenn an einer Arbeitsstation ein Fehler auftritt, beispielsweise eine Nähnadel bricht. Der an dieser Arbeitsstation durchzuführende Nähvorgang kann nicht weitergeführt werden. Da die im Arbeitsablauf davor angeordneten Arbeitsstationen fehlerfrei weiterarbeiten, stauen sich die textilen Werkstücke an der vom Nadelbruch betroffenen Arbeitsstation. Umgekehrt erhalten die nachfolgenden Arbeitsstationen keine weiteren Werkstücke und können schließlich ebenfalls nicht mehr weiterarbeiten.

Im Falle eines Nadelbruchs an einer Arbeitsstation muss sichergestellt werden, dass alle Bruchstücke der Nadel gefunden wurden und kein Bruchstück in dem textilen Werkstück und mithin im herzustellenden Textilteil verbleibt. Verbleiben die Bruchstücke im betreffenden Textilteil, besteht die Gefahr, dass ein zukünftiger Träger des Textilteils verletzt wird (Imageschaden, Produkthaftung).

Die Überprüfung, ob alle Nadelstücke gefunden wurden, nimmt Zeit in Anspruch und blockiert den Herstellungsprozess. Aus diesem Grund kann es als Aufgabe der Erfindung angesehen werden, die Qualitätssicherung beim Nähprozess zu verbessern und insbesondere die Entfernung aller Bruchstücke der gebrochenen Nadel aus der betroffenen Arbeitsstationen oder den Austausch einer beschädigten Nadel so schnell wie möglich durchzuführen, um den Herstellungsprozess zügig wieder aufnehmen zu können.

Nach Maßgabe der Erfindung wird das Verfahren zur Überprüfung (Überprüfungsverfahren), ob sämtliche Bruchstücke einer gebrochenen Nadel, insbesondere einer Maschinennähnadel, in einem Behälter vorhanden sind, vorgenommen, indem in einem durch einen Grundkörper und einen Deckel begrenzten Aufnahmeraum des Behälters, die Bruchstücke der gebrochenen Nadel mittels eines Haltemagneten im Aufnahmeraum ausgerichtet angeordnet werden. Das Anordnen erfolgt derart, dass die ursprüngliche Form der gebrochenen Nadel aus den Bruchstücken nachgestellt (möglichst genau rekonstruiert) wird. Der Aufnahmeraum und der Haltemagnet sind so konstruiert, dass dies unkompliziert zu bewerkstelligen ist.

Vor dem Bereitstellen der Ersatz-Nähnadel für die Arbeitsstation wird, z.B. mit dem Behälter, geprüft, ob die ausgetauschte Nadel vollständig ist und keine Bruchstücke in der Arbeitsstation oder dem Werkstück zurückgeblieben sind und erst wenn dies bestätigt wurde, wird anschließend die Ersatz-Nähnadel für die Arbeitsstation (11) freigegeben wird.

Sobald also, bei Verwendung des Behälters, sichergestellt ist, dass sich alle Bruchstücke der Nadel im Behälter befinden, wird eine Ersatz-Nadel für die Arbeitsstation freigegeben. Andernfalls wird erst nach einer längeren Suche, die einem genau vorgeschriebenen Plan folgt, der z.B. vorschreibt, dass das Textilteil in einem speziellen Detektorraum auf Nadelbruchstücke zu untersuchen ist, dokumentiert, dass nicht alle Bruchstücke gefunden wurden. Erst anschließend wird die Suche endgültig abgebrochen und die Näharbeit wieder aufgenommen.

Vorzugsweise werden in jedem Behälter nur die Bruchstücke einer einzigen Nadel angeordnet.

Der Behälter zur Aufbewahrung von Bruchstücken einer Nadel, insbesondere einer Maschinennähnadel, weist bevorzugt einen Grundkörper sowie einen Deckel, die einen Aufnahmeraum begrenzen, und einen am Grundkörper vorhandenen Haltemagneten auf, dessen Magnetfeld zum Halten der Bruchstücke an der Achse dient.

Der Haltemagnet, üblicherweise ein Permanentmagnet, erstreckt sich vorzugsweise längs einer Achse, beispielsweise entlang einer Längsmittelachse des Aufnahmeraums, am Boden des Grundkörpers. Die Bruchstücke können somit sehr einfach entlang der Achse im Aufnahmeraum angeordnet werden.

Vorzugsweise ist der Haltemagnet in einer Nut des Grundkörpers angeordnet. Die Nut erstreckt sich bevorzugt entlang der Achse und ist insbesondere zum Aufnahmeraum hin offen. Die dem Aufnahmeraum zugeordnete Oberseite des Haltemagneten schließt sich dadurch an eine Bodenfläche des Grundkörpers an, die dem Aufnahmeraum zugewandt ist. Die Oberseite des Magneten und die Bodenfläche des Grundkörpers können - müssen aber nicht - stufen- oder kantenlos aneinander anschließen. Der Haltemagnet kann beispielsweise in die Nut eingeklebt sein.

Bei einem bevorzugten Ausführungsbeispiel ist die Bodenfläche des Grundkörpers zur Nut bzw. zum Haltemagneten hin geneigt. Ausgehend von den beiden sich parallel zu der Achse erstreckenden Seitenkanten der Bodenfläche neigt sich diese jeweils nach unten zum Haltemagneten hin. Ein in den Aufnahmeraum eingelegtes Bruchstück rutscht entlang der geneigten Bodenfläche dadurch automatisch zum Haltemagneten hin und wird dort sicher durch das Magnetfeld gehalten.

Im Aufnahmeraum kann zumindest an einer Stelle eine Anschlagfläche angeordnet sein, die vorzugsweise rechtwinklig zu der dem Aufnahmeraum zugewandten Oberseite des Haltemagneten bzw. rechtwinklig zu der Achse ausgerichtet ist. Die Anschlagfläche befindet sich vorzugsweise an einem axialen Ende des Haltemagneten. Die Bruchstücke der Nadel können geordnet ausgehend von der Anschlagfläche entlang der Achse angeordnet werden, wobei sich leichter erkennen lässt, ob alle Bruchstücke gefunden werden konnten.

Die Stärke des Haltemagneten, die von den spezifischen Eigenschaften wie der maximalen magnetischen Energiedichte und von der Geometrie (Größe) des Magneten abhängt, wird so (groß) gewählt, dass am Haltemagneten angeordnete Nadelbruchstücke auch dann sicher am Haltemagneten festgehalten werden, wenn der Behälter hinunterfällt. Der Behälter fällt typischerweise aus einer Tischhöhe (Höhe 0,5 bis 1 Meter) oder einer Handhöhe (0,8 bis 1,2 Meter). Es sind also im Normalfall keine Fallhöhen von mehr als 1,5 Meter zu erwarten. Um sicherzustellen, dass die Nadelbruchstücke bis zu Fallhöhen von maximal 1,5 Meter sicher vom eingesetzten Magneten gehalten werden, werden vorzugsweise relativ starke Magneten, (Magneten mit großen Abmessungen und mit einer hohen magnetischen Energiedichte) verwendet, z.B. Magneten, die aus Legierungen wie Samarium-Cobalt (SmCo₅: maximale magnetische Enegiedichte (BH)_{max°} 130 - 200 kJ/m³; Sm₂Co₁₇: (BH)ₘₐₓ= 160 - 260 kJ/m³) oder Neodym-Eisen-Bor (Nd₂Fe₁₄B: (BH)ₘₐₓ ~ 512 kJ/m³) bestehen. Denkbar ist auch die Verwendung von Dauermagneten aus Aluminium-Nickel-Cobalt-Legierungen oder aus Ferriten.

Andererseits dürfen die Nadelbruchstücke nur so fest am Haltemagneten haften, dass aus den Bruchstücken die ursprüngliche Form der Nadel nachgestellt werden kann. Zum Nachstellen werden üblicherweise die Nadelbruchstücke am Haltemagneten in ihrer ungefähren Position am Haltemagneten angebracht und anschießend auf ihre exakte Position geschoben. Um dies zu ermöglichen, darf die Reibung (Haftreibung) zwischen den am Haltemagneten angeordneten Bruchstücken und dem Haltemagneten höchstens so groß sein, dass die Bruchstücke einfach, d.h. ohne großen Kraftaufwand, auf der Oberfläche des Haltemagneten verschoben werden können. Insbesondere dürfen sich die Bruchstücke während des Verschiebens nicht vom Haltmagneten lösen.

Um zu erreichen, dass die Bruchstücke selbst beim Herabfallen des Behälters sicher am Haltemagneten haften bleiben, andererseits die Bruchstücke aber auch unkompliziert auf der Oberfläche des Haltemagneten verschoben werden können, werden vergleichsweise starke Haltemagnete eingesetzt. Gleichzeitig ist die Oberfläche von zumindest derjenigen Seite des Haltemagneten, auf der die Nadelbruchstücke angeordnet werden, so beschaffen, dass die Reibungskoeffizienten (Haftreibungs- und Gleitreibungskoeffizient) zwischen der betreffenden Oberfläche und den Nadelbruchstücken vergleichsweise gering sind.

Die erforderlichen, geringen Reibungszahlen können dadurch erreicht werden, dass Haltemagneten eingesetzt werden, bei denen die betreffenden Oberflächen geringe Oberflächenrauhigkeiten aufweisen. Um entsprechend geringe Oberflächenrauhigkeiten zu erhalten, können die Oberflächen des Haltmagneten, z.B. mittels Schleifens oder Polierens, geglättet sein. Die betreffenden Oberflächen können zusätzlich oder alternativ mit einem Material, z.B. PTFE oder sonstigen Kunststoffen, überdeckt sein, das gegenüber dem Material der Nadelbruchstücke, also üblicherweise gegenüber Stahl, gute Gleiteigenschaften besitzt.

Die Überdeckung der Oberfläche das Haltemagneten, an der die Nadelbruchstücke angeordnet werden, kann mittels eines Beschichtungsverfahrens, mittels Aufbringens z.B. einer dünnen Platte/Folie, oder durch ein vollständiges Ummanteln des Haltemagneten, z.B. durch Einbringen in ein Gehäuse erfolgen. Es ist zudem auch denkbar, die betreffenden Oberflächen mit einem Gleitmittel, wie z.B. einem Öl, zu versehen.

Haftreibungskoeffizienten von Stahl auf Stahl werden mit 0,15 bis 0,5 und von Stahl auf PTFE mit 0,04 bis 0,11 angegeben. Für die Haftreibungskoeffizienten von Stahl auf Samarium-Kobalt- oder Neodym-Eisen-Bor-Magneten sind aus der Literatur keine Werte bekannt. Geht man jedoch davon aus, dass die Haftreibungskoeffizienten von Stahl auf Samarium-Kobalt- oder Neodym-Eisen-Bor-Magneten näherungsweise so groß sind wie die von Stahl auf Stahl (s.o.), Stahl auf Grauguss (0,19) oder Stahl auf Bronze (0,19), dann sind bei einem Einsatz von unbeschichteten Haltmagneten Maximalwerte des Haftreibungskoeffizienten zwischen der Oberfläche des Magneten und den Nadelbruchstücken Werte von maximal 0,2, vorzugsweise maximal 0,15 anzustreben. Mit Magneten, die mit einer Bedeckungsschicht versehen sind, können, wie oben gezeigt, in Verbindung mit Nadelbruchstücken generell wesentlich niedrigere Haftreibungskoeffizienten erzielt werden. Entsprechend sind für diese Magneten Haftreibungskoeffizienten von kleiner 0,1 vorzugsweise kleiner 0,05 anzustreben.

Kommt ein mit einer Überdeckungsschicht versehener Magnet zum Einsatz, muss dies bei der Wahl (der Stärke) des Magneten berücksichtigt werden. Denn durch die Bedeckungsschicht werden die Bruchstücke vom Magneten beabstandet, wodurch die auf die Bruchstücke wirkende magnetische Kraft geringer ausfällt, als wenn sich die Bruchstücke direkt auf der Oberfläche des Aufnahmemagneten befänden.

Im Aufnahmeraum kann mindestens eine Markierung, beispielsweise eine Skala und/oder eine zeichnerische Abbildung der Nadel (d.h.die maßgenaue Abbildung der an der betreffenden Arbeitsstation verwendeten Nadel), vorhanden sein. Die Markierung dient zur Prüfung, ob sich alle Bruchstücke der Nadel im Behälter befinden. Üblicherweise ist auf der Skala die Gesamtlänge der an der Arbeitsstation verwendeten Nadel markiert. Vorzugsweise sind die an der betreffenden Arbeitsstation häufig verwendeten Nadeltypen abgebildet. Die Markierung kann auf der Oberseite des Haltemagneten und/oder an der Bodenfläche des Grundkörpers vorhanden oder angebracht sein. Die Markierungen dienen zur Messung der Länge der gefundenen Bruchstücke bzw. einem direkten Vergleich mit der ursprünglichen Form der Nadel und vereinfachen damit die Entscheidung, ob alle Bruchstücke der Nadel gefunden wurden. Insbesondere kann die Markierung unmittelbar an der Anschlagfläche beginnen, d.h. sie kann unmittelbar in Richtung der Achse an die Anschlagfläche anschließen. Die Bruchstücke lassen sich dann beispielsweise ausgehend von der Anschlagfläche geordnet aneinander anlegen, so dass schnell erfassbar ist, ob die Gesamtlänge der zusammengesetzten Bruchstücke der Gesamtlänge der Nadel entspricht. Dies erleichtert und beschleunigt weiter die Prüfung, ob die gebrochene Nähnadel vollständig aus dem textilen Werkstück entfernt werden konnte.

Der Deckel des Behälters kann beweglich, beispielsweise schwenkbar oder verschiebbar am Grundkörper gelagert sein. Der Deckel ist bevorzugt zwischen einer Offenstellung und einer Schließstellung bewegbar. Vorzugsweise ist der Deckel des Behälters zwischen einer Schließstellung und einer Offenstellung bewegbar, beispielsweise verschiebbar oder schwenkbar am Grundkörper gelagert. Es können außerdem Haltemittel vorhanden sein, um den Deckel am Grundkörper in seiner Schließstellung zu halten. Die Haltemittel können durch Rastmittel oder andere Mittel gebildet sein, wobei insbesondere eine kraft- und/ oder formschlüssige Verbindung zwischen einem Rastvorsprung oder einer Rastnoppe am Deckel oder am Grundkörper und einer Rastausnehmung am jeweils anderen Behälterteil in der Schließstellung des Deckels hergestellt wird. In einer kostengünstigen Variante ist der Deckel des Behälters zwar abnehmbar, bei geschlossenem Deckel wird er jedoch durch eines der oben beschriebenen Haltemittel sicher in der Schließstellung gehalten.

Der Deckel kann bei einer bevorzugten Ausführungsform zumindest teilweise aus transparentem Material bestehen. Beispielsweise kann er vollständig transparent sein oder zumindest ein transparentes Sichtfenster aufweisen, so dass der Einblick in den Aufnahmeraum in der Schließstellung des Deckels möglich ist. An diesem Sichtfenster oder im transparenten Bereich kann ein Lupenteil vorhanden sein. Das Lupenteil ist vorzugsweise am Deckel so angeordnet, dass es sich in der Schließstellung des Deckels im Bereich über dem Haltemagneten befindet. Über das Lupenteil lassen sich die Bruchstücke der Nadel genauer betrachten, so dass insbesondere durch Begutachtung der Bruchstellen beurteilt werden kann, ob zwei Bruchstücke der Nadel unmittelbar aneinander anschließen oder nicht.

Im Aufnahmeraum des Behälters kann auch eine batteriegespeiste Lichtquelle angeordnet sein, um genügend Licht für die Betrachtung der Bruchstücke zu haben. Ein bei geschlossenem Deckel zugänglicher Schalter kann zum Ein- und Ausschalten der Lichtquelle dienen. Ein vorstehend beschriebener Behälter eignet sich insbesondere zur Verwendung bei dem erfindungsgemäßen Verfahren zur Qualitätssicherung (Qualitätssicherungsverfahren) beim Nähen eines Textilteils. Dabei können einer oder mehrere der erfindungsgemäßen Behälter in dem zwischen den Arbeitstationen bewegbaren Wagen und/oder an jeder Arbeitsstation, an der genäht wird, vorhanden sein.

Der Einsatz des erfindungsgemäßen Behälters hat gegenüber der bisher verwendeten Methode, bei der Nadelbruchstücke mit der groben Zeichnung der Nadel verglichen und anschließend mittels eines transparenten Klebebands auf einem zur Dokumentation dienendem Formular aufgeklebt werden, den Vorteil, dass die Originalform der Nadel unkomplizierter und schneller mit den Nadelbruchstücken nachgebildet werden kann. Denn die Nadelbruchstücke können bei der Verwendung des erfindungsgemäßen Behälters (anders als bei der bisher verwendeten Methode) zur Nachbildung der ursprünglichen Nadelform einfach auf dem Haltemagneten verschoben werden. So können gleichzeitig die Ausfallzeiten verkürzt werden und die Wahrscheinlichkeit dafür, dass ein Fehlen von Bruchstücken nicht bemerkt wird, kann verringert werden.

Im Nachgang hierzu erleichtern Dokumentationsblätter, die während des Verfahrens ausgefüllt werden, und spezielle Behältnisse (Tüten) für die Nadelbruchstücke, üblicherweise selbstklebende Nadelbriefchen, die Einlagerung der Nadelbruchstücke in einem vorgeschriebenen Lager, dessen Inhalt auch dokumentiert werden muss.

In einer bevorzugten Variante bestehen die verwendeten Nadelbriefchen aus einem Hauptabschnitt, der eine Tüte zur Aufnahme der Nadelbruchstücke aufweist, und aus einem mit dem Hauptabschnitt verbundenen Laschenabschnitt, der zum Verschließen der Tüte dient. Vorzugsweise sind der Hauptabschnitt und der Laschenabschnitt aus einem zusammenhängenden, z.B. rechteckigen, Stück Folie, z.B. aus Kunststoff oder Papier, hergestellt.

Die Tüte wird bevorzugt (in Verbindung mit dem Hauptabschnitt) durch ein weiteres Stück Folie (Aufsatzfolie) gebildet, die mit dem Hauptabschnitt stoffschlüssig, z.B. mittels Verschweißens oder Verklebens, verbunden ist. Vorzugsweise ist die Aufsatzfolie an den drei dem Laschenabschnitt abgewandten Seiten, d.h. auf allen Seiten bis auf die Seite, die dem Laschenabschnitt zugewandt ist, vorzugsweise vollständig mit dem Hauptabschnitt verbunden, wodurch eine Tüte gebildet wird, die (ausschließlich) auf der dem Laschenabschnitt zugewandten Seite geöffnet ist (d.h. eine Öffnung aufweist).

Um eine spätere Sichtkontrolle von Nadelbruchstücken in der Tüte zu vereinfachen, kann zumindest die Aufsatzfolie aus einem transparenten Material, z.B. aus transparentem Kunststoff, bestehen. Vorzugsweise bestehen der Hauptabschnitt, der Laschenabschnitt und/oder die Aufsatzfolie aus einem transparenten Material, z.B.: aus transparentem Kunststoff.

Vorteilhafterweise ist der Laschenabschnitt mit einer ersten Klebefläche, die zum Zukleben der Tüte dient und sich vorzugsweise auf derselben Seite (Oberfläche) des Nadelbriefchens befindet an der die Aufsatzfolie befestigt ist, versehen. Zum Verschließen der Tüte wird üblicherweise der Laschenabschnitt umgeklappt, z.B. durch Knicken einer zwischen dem Hautabschnitt und dem Laschenabschnitt verlaufenden Verbindungslinie, und in seiner umgeklappten, d.h. in seiner um ca. 180° gekippten, Position mittels der Klebefläche mit der Aufsatzfolie und/oder dem Hauptabschnitt verbunden (verklebt). Als Alternative sind zum Verschließen der Tüte jedoch auch formschlüssige Verbindungen, z.B. mittels Einsteckens einer Lasche, denkbar.

Zudem kann der Hauptabschnitt mit einer zweiten Klebefläche versehen sein, die zum Aufkleben des Nadelbriefchens auf einem Dokumentationsblatt dient. Die zweite Klebefläche ist bevorzugt auf der Seite (Oberfläche) des Nadelbriefchens, die der Seite gegenüberliegt, an der die Aufsatzfolie angeordnet ist. Sowohl die erste als auch die zweite Klebefläche können, in Art eines Klebeetiketts, mit einer Schutzfolie versehen sein, die vor der Verwendung der jeweiligen Klebefläche abzuziehen sind.

Die Nadelbriefchen werden bevorzugt in Form eines Nadelbriefbogens, der mehrere/viele Nadelbriefchen enthält, hergestellt. Hierzu können z.B. zwei übereinander angeordnete transparente, Kunststofffolien, die abschnittweise mit Klebeflächen (in der Art von Etiketten) versehen sind, bereichsweise miteinander verschweißt werden, wodurch die jeweiligen Tüten gebildet werden. Die Nadelbriefchen werden entweder aus den Nadelbriefbögen ausgeschnitten oder die Nadelbriefbögen sind derart gefertigt (z.B. mit Perforationen oder ausgedünnten Linien versehen), dass die einzelnen Nadelbriefchen voneinander getrennt werden können.

Nachdem die Nadelbruchstücke in die Tüte eines Nadelbriefchen eingebracht worden sind, wird die Tüte mittels des Laschenabschnitts verschlossen und anschließend, vorzugsweise mittels der zweiten Klebefläche, so auf ein Dokumentationsblatt (z.B. aus Papier oder Karton) geklebt, dass die Aufsatzfolie nach oben weist. Ist die Aufsatzfolie transparent (besteht sie aus einem durchsichtigen Material), dann können die Nadelbruchstücke ohne Öffnen der Tüte inspiziert werden. Neben mehreren Flächen, die zum Aufkleben der Nadelbriefchen vorgesehen sind und die z.B. spaltenförmig untereinander liegend angeordnet sind, enthält das Dokumentationsblatt weitere, z.B. in Spalten angeordnete, Dokumentationsfelder, in welche z.B. das Datum, die Zeit, die betroffene Arbeitsstation (Maschine), die Produktionslinie, die an der Arbeitsstation arbeitende Person (Operator) und die Teilenummer der gebrochenen Nadel eingetragen werden können.

Des Weiteren ist der Einsatz eines zwischen den Arbeitsstationen bewegbaren Wagens vorgesehen, der mit mindestens einem erfindungsgemäßen Behälter ausgestattet ist, d.h. der wenigsten einen Behälter zur Aufbewahrung von Bruchstücken einer Nadel aufweist.

Der Wagen wird vorteilhafterweise für ein Verfahren zur Qualitätssicherung (Qualitätssicherungsverfahren) beim Nähen eines Textilteils, mit mehreren Arbeitsstationen, an denen jeweils ein Nähvorgang durchgeführt wird, wobei ein textiles Werkstück die Arbeitsstationen in einer vorgegebenen Reihenfolge durchläuft, verwendet. Der zwischen den Arbeitsstationen bewegbare Wagen nimmt im Falle eines Nadelbruches an einer Arbeitsstation die Bruchstücke einer gebrochenen Nähnadel auf und stellt eine Ersatz-Nähnadel für die (betreffende) Arbeitsstation bereit.

Konkret gibt im Falle eines Nadelbruches oder einer Beschädigung der Nadel an einer Arbeitsstation die an der Arbeitsstation arbeitende Person sofort Alarm. Von einer zentralen Stelle (Nadelausgabestelle) aus wird der Wagen sofort an die betroffene Arbeitsstation gefahren. Der Wagen dient zur Aufnahme der beschädigten Nadel bzw. der Bruchstücke der gebrochenen Nähnadel und stellt gleichzeitig eine Ersatznähnadel für die Arbeitsstation bereit. Die an der Arbeitsstation arbeitende Person ist daher nicht gezwungen, wie bislang üblich, die Arbeitsstation zu verlassen und an zentraler Stelle die beschädigte oder gebrochene Nähnadel gegen eine Ersatznähnadel auszutauschen. Diese Vorgehensweise birgt die Gefahr, dass die an der Arbeitsstation arbeitende Person aus Versehen Nadelbruchstücke, die sich z.B. an der Kleidung der Person befinden, vom Arbeitsplatz fortträgt und unterwegs verliert. Solche Nadelbruchstücke lassen sich praktisch nicht mehr auffinden. Beim Einsatz des erfindungsgemäßen Wagens erfolgt hingegen der Nadeltausch direkt an der betroffenen Arbeitsstation, wodurch überflüssiger Wege eingespart werden und die Unterbrechungsdauer des Herstellungsprozesses weiter verringert wird. Zudem besteht keine Gefahr mehr, dass Nadelbruchstücke von der Arbeitsstation weggetragen werden und unterwegs verloren gehen.

Vorzugsweise weist der Wagen eine Arbeitsfläche auf, auf welcher der erfindungsgemäße Behälter angeordnet und vor Ort geprüft werden kann, ob sämtliche Bruchstücke vorhanden sind. Sobald alle Bruchstücke gefunden wurden, werden diese aus dem Behälter entnommen und in eine Tüte (oder ein ähnliches Behältnis) eingebracht, die z.B. in Form eines selbstklebenden Nadelbriefchens vorliegt. Anschließend wird die Tüte verschlossen, z.B. zugeklebt. Die Tüte mit den Bruchstücken wird innerhalb des dritten Aufbewahrungsbereichs des Wagens gelagert. Aus Sicherheitsgründen ist die Tüte so aufgebaut, dass sie nach dem Verschließen nicht mehr zerstörungsfrei geöffnet werden kann.

Vorteilhafterweise ist der Aufbewahrungsbereich für Ersatznähnadeln und/oder der Aufbewahrungsbereich für gebrauchte, ungebrochene Nadeln durch einen im Innenbereich des Wagens angeordneten schließbaren Behälter gebildet.

Bei einem Ausführungsbeispiel des Wagens gemäß der vorliegenden Erfindung weist dieser einen Innenraum mit drei voneinander getrennten Aufbewahrungsbereichen auf. In einem ersten Aufbewahrungsbereich, der beispielsweise durch eine verschließbare Schublade gebildet sein kann, sind neue Ersatznähnadeln für den Nadeltausch gelagert. In einem zweiten Aufbewahrungsbereich, der beispielsweise durch einen verschließbaren Aufnahmebehälter gebildet sein kann, werden gebrauchte, verbogene, verschlissene oder anderweitig beschädigte, aber ungebrochene Nadeln aufbewahrt. Ein dritter Aufbewahrungsbereich dient zur Lagerung von gebrochenen Nadeln und zur lückenlosen Dokumentation des Vorhandenseins der gebrochenen Nadel bzw. von deren einzelnen Bruchstücken. Durch die strikte Trennung der Aufbewahrungsbereiche wird ein versehentliches Durcheinanderbringen von Nadeln vermieden.

Vorteilhafterweise wird die Trennung der Bereiche für neue und für gebrauchte, ungebrochene Nadeln mittels verriegelbarer oder abschließbarer Schubladen realisiert. Hierdurch wird der Zugang zu den jeweiligen Bereichen erleichtert, der z.B. durch eine (im vorderen Bereich des Wagens angebrachte) Türe eher erschwert würde. Gleichzeitig erleichtern ausziehbare Schubladen den Zugriff auf die Nadeln und die Arbeitsmittel und verkürzen somit die für einen Nadeltausch erforderlichen Arbeitszeiten. In der Folge werden die durch das Tauschen von Nadeln bedingten Ausfallzeiten (der laufenden Produktion) verringert.

Vorzugsweise kann auf der Arbeitsfläche ein Kanal, ein Schacht oder ähnliches, der beispielsweise durch ein Rohr gebildet sein kann, ausmünden, das mit dem Aufbewahrungsbereich bzw. einem Aufbewahrungsbehälter für gebrauchte ungebrochene Nadeln verbunden ist. Ungebrochene, gebrauchte Nadeln können dort eingeworfen und über den Schacht in den zweiten Aufbewahrungsbereich für gebrauchte, ungebrochene Nadeln transportiert werden. Beispielsweise kann der Schacht oder der Kanal in einem Aufbewahrungsbehälter für gebrauchte, ungebrochene Nadeln enden.

In einem anderen Ausführungsbeispiel - in dem auf den Schacht verzichtet wird - ist der zweite Aufbewahrungsbereich durch einen abschließbaren Aufbewahrungsbehälter mit einem Einwurfschlitz realisiert. Der Einwurfschlitz sollte die Maße von 50mm x 5mm nicht überschreiten, um im Falle des Kippens des Behälters ein ungewolltes Herausfallen der Nadeln sicherzustellen.

Vorzugsweise hat der Aufbewahrungsbehälter Maße von maximal 25x25x25 cm, um beim Vorgang des Entleerens, wegen des mit wachsendem Volumens zunehmenden maximalen Gewichts des Inhaltes, Unfälle zu vermeiden und damit die Gefahr zu verringern, dass während des (schwer durchführbaren) Entleerungsvorgangs Nadeln den abgesicherten Kreislauf des Verfahrens verlassen.

Des Weiteren ist der Aufbewahrungsbehälter bevorzugt auf einer rutschfesten Unterlage oder in einer Fixierung positioniert, um, wenn der Wagen in Bewegung ist, ein Verrutschen oder gar Kippen des Aufbewahrungsbehälters zu verhindern.

Zudem ist der Aufbewahrungsbehälter bevorzugt durchsichtig, was insbesondere dazu dient, eine anstehende Entleerung rechtzeitig in den Arbeitsablauf integrieren zu können. Auch werden Verletzungen vermieden, die beim Versuch, Nadeln durch den Schlitz in einen vollen Behälter zu stecken, verursacht werden können. Verletzungen können entstehen, wenn beim Einstecken von Nadeln in einen vollen Aufbewahrungsbehälter die betreffende Nadel unerwartet auf die bereits im Aufbewahrungsbehälter vorhandenen Nadeln trifft und infolgedessen ein mechanischer Widerstand auftritt.

Es ist vorgesehen, dass der Zugang entweder zum ersten Aufbewahrungsbereich für neue Nadeln oder zum zweiten Aufbewahrungsbereich für gebrauchte ungebrochene Nadeln über eine Umschalteinrichtung, üblicherweise realisiert als bewegbare Tür oder als Schubladen erfolgt. In beiden Fällen ist es vorteilhaft einen Sperrmechanismus vorzusehen, der einen gleichzeitigen Zugang zu beiden Aufbewahrungsbereichen verhindert. Ein versehentliches Verwechseln oder Durcheinanderbringen von Ersatznähnadeln und gebrauchten, ungebrochenen Nadeln wird damit vermieden. Beispielsweise kann die Umschalteinrichtung als Schiebetüre ausgeführt sein und entweder den Zugang zum ersten Aufbewahrungsbereich oder zum zweiten Aufbewahrungsbereich freigeben und den jeweils anderen Aufbewahrungsbereich verschließen.

Entsprechend weist der Wagen wenigstens eine zwischen zwei Stellungen bewegbare Umschalteinrichtung, z.B. Tür, auf, wobei die Umschalteinrichtung (Tür) in der einen Stellung den Zugang zu dem Aufbewahrungsbereich für Ersatznähnadeln ermöglicht und den Zugang zu dem Aufbewahrungsbereich für gebrauchte, ungebrochene Nadeln verhindert und in der jeweils anderen Stellung den Zugang zu dem Aufbewahrungsbereich für Ersatznähnadeln verhindert und den Zugang zu dem Aufbewahrungsbereich für gebrauchte ungebrochene Nadeln ermöglicht.

Der Wagen kann mit Werkzeugen, wie z.B. einem Magnetbesen und/oder mit einem Magnetstift ausgestattet sein, die mit starken Magneten ausgestattet sind, welche die (üblicherweise ferromagnetischen) Bruchstücke der Nadel anziehen, sobald der jeweilige Magnet in die Nähe der Bruchstücke gebracht wird. Die Suche der Nadelbruchstücke kann so wesentlich vereinfacht werden.

Der Magnetbesen besteht üblicherweise aus einem stabförmigen Magnet, an dessen Stirnseiten jeweils ein Rad angeordnet ist, und einem Stil. Der Magnet kann eine Farbe, z.B. schwarz, aufweisen, durch die ein großer Kontrast zu den metallischen Nadelbruchstücken gebildet wird. Zum Auffinden von Nadelbruchstücken wird der Magnetbesen mit Hilfe des Stils über einen Boden oder andere ebene Bereiche gerollt, auf dem sich Nadelbruchstücke befinden könnten, wobei der stabförmige Magnet mit relativ geringem Abstand über den Boden geführt wird. Nadelstücke, die sich am Boden befinden, werden vom Magneten angezogen und können dort, aufgrund des hohen farblichen Kontrasts (gegenüber dem Magneten) unkompliziert aufgefunden werden.

In einem bevorzugten Ausführungsbeispiel kann ein Miniaturmagnetbesen zum Einsatz gebracht werden, der bei Reinigungsarbeiten am Wagen möglicherweise vorhandene Nadelsplitter aufnehmen kann.

Der Magnetstift besteht üblicherweise aus einem Stab, an dessen einem Ende ein Magnet angeordnet ist. Der Magnet wird über diejenigen Bereiche geführt, in denen sich Nadelstücke befinden könnten, die dem Magnetbesen jedoch nicht zugänglich sind, wie z.B. Bereiche innerhalb von Maschinen, Bereiche der textilen Werkstücke oder Bereiche innerhalb des Wagens (z. B. die Ecken von Schubladeneinsätzen).

Der Wagen kann im gesamten Innenbereich sowie auf der Arbeitsplatte mit einer schwarzen, üblicherweise rutschfesten und weichen Auflage ausgestattet sein. Die schwarze Farbe dient vornehmlich zum einfachen Erkennen der kleinen (silbernen) Bruchstücke der Nadeln auf der Auflage. Des Weiteren soll die weiche Auflage verhindern, dass möglicherweise herunterfallende Nadelteile aufspringen und danach schwer gefunden werden können. Die Arbeitsplatte ist bevorzugt von einem umlaufenden Rand umgeben, der z.B. mindestens 0,5 cm hoch ist. Er dient dazu, das Herabfallen von Nadelteilen zu verhindern.

Die Gesamtmaße des Wagens sowie die Funktionalität der Rollen sind üblicherweise auf die Gegebenheiten in einem nähenden Betrieb angepasst. Bevorzugt ist der Wagen vorne mit 2 feststehenden und hinten mit 2 beweglichen Rollen ausgestattet, um ein genaues Rangieren zu ermöglichen, ohne dass dabei jedoch der Wagen aufgrund seiner üblicherweise sehr kopflastigen Bestückung kippen kann.

Wo am Wagen der Zugang zu den Aufbewahrungsbereichen (Zugang zum Inhalt des Wagens) angeordnet ist, ist abhängig davon, auf welcher Seite der Arbeitsstationen (der Maschinen in den Produktionslinien) der Wagen am Einsatzort jeweils eingesetzt wird und wie breit dort die Gänge zwischen den einzelnen Produktionslinien sind. Der Zugang wird üblicherweise auf einem der Seitenteile des Wagens angebracht, wenn die Gänge zwischen den Produktionslinien ausreichend breit sind, um einen (bequemen) seitlichen Zugang/Zugriff auf einen an einer der Arbeitsstationen abgestellten Wagen zu ermöglichen. Sind die Gänge hierfür zu schmal, wird der Zugang zum Wagen üblicherweise auf der Vorder- oder der Rückseite des Wagens angebracht.

Der Wagen wird so an der Arbeitsstation, bei der ein Nadelbruch aufgetreten ist, abgestellt, dass eines seiner Seitenteile der Arbeitsstation (und damit der an der Arbeitsstation arbeitenden Näherin) zugewandt ist.

Sind die Gänge zwischen den Produktionslinien ausreichend breit, soll sich, wenn der Wagen an einer Arbeitsstation abgestellt ist, der Zugang zum Inhalt des Wagens an dem der betreffenden Arbeitsstation (der Produktionslinie) abgewandten Seitenteil befinden. Abhängig von den Gegebenheiten am Einsatzort ist entsprechend der Zugang entweder am linken oder rechten (bezüglich der Fahrtrichtung/Schieberichtung des Wagens) Seitenteil des Wagens angeordnet. Das der Arbeitsstation zugewandte Seitenteil und der Zugang zu den Aufbewahrungsbereichen sind demnach zueinander in einem Winkel von 180° angeordnet.

Sind die Gänge hingegen zu eng für ein seitliches Anordnen des Zugangs, dann ist dieser an einer der Stirnseiten (d.h. an der Vorder- oder Rückseite) des Wagens angeordnet. Das der Arbeitsstation zugewandte Seitenteil des Wagens und der Zugang (zu den Aufbewahrungsbereichen) bilden hier einen Winkel von 90°.

Dadurch, dass (im Falle eines Nadelbruchs) der Zugang zu den Aufbewahrungsbereichen und die der Arbeitsstation zugewandte Seite des Wagens zueinander vorzugsweise in einem Winkel von 180° (der Zugangs ist diametral von der Arbeitsstation abgewandt), mindestens jedoch in einem Winkel von 90° (der Zugang ist seitlich abgewandt) angeordnet sind, wird sichergestellt, dass lediglich die Person, die mit dem Wagen arbeitet, über den Zugang (direkten) Zugriff zum Inhalt des Wagens hat. Denn die Näherin und der Mechaniker befinden sich entweder auf der dem Zugang gegenüberliegenden Seite des Wagens oder sie sind von diesem zumindest um 90° abgewandt. Ein Zugang zum Inhalt des Wagens, der zu Verwechslungen, zu sonstigen Fehlern oder zu Diebstählen führen könnte, ist somit erschwert.

Der Zugang zum Wagen ist vorzugsweise verschließbar ausgeführt. Aus Platzgründen ist hierzu üblicherweise eine Roll- oder eine Schiebetür eingesetzt.

Der Magnetbesen und ggf. der Magnetstift werden bevorzugt an der dem Zugang abgewandten Seite angebracht, sodass ihn die Näherin von ihrer Position aus erreichen und einsetzen kann.

Auf der Arbeitsfläche kann sich im Bereich, der der Seite zugewandt ist, an der sich der Magnetbesen befindet, ein Port für Arbeitsutensilien befinden, in dem z. B. die unbenutzten Tüten für die Nadelbruchstücke (Nadelbriefchen) untergebracht sind. In einer kostengünstigen Variante kann der Port durch eine nach oben geöffnete Schachtel, z.B. aus Kunststoff, realisiert sein, die auf die Arbeitsfläche gestellt wird. Der Port kann einen gekennzeichneten (vorgeschriebenen) Bereich enthalten, der zum Abstellen des Behälters dient (Abstellbereich), mit dem das Überprüfungsverfahren durchgeführt wird. Alternativ kann zum Abstellen des Behälters ein Bereich der Arbeitsplatte, z.B. in Form einer in den Boden der Arbeitsplatte eingebrachten Aussparung, vorgesehen sein.

Von der der Arbeitsstation zugewandten Seite aus (d.h. für die Näherin) sollen nur der Magnetbesen/Magnetstift und der Port (direkt) erreichbar sein. Es sind also lediglich der Magnetbesen und der Port allgemein zugängliche Bereiche, der Rest des Wagens ist eine geschlossene Einheit.

Von der Seite des Wagens aus, auf der sich der Zugang befindet, sollte es möglich sein, den Behälter vom Abstellbereich zu entnehmen (wenn sich dieser im Abstellbereich befindet). Ist der Abstellbereich in den Port integriert, dann ist der Port so zu konstruieren, dass ein Zugriff auf den Aufnahmebereicht von oben aus möglich ist. Hierzu kann der Port nach oben hin offen sein oder er kann eine Öffnung an der Oberseite aufweisen. Ist der Abstellbereich in der Arbeitsplatte (z.B. in Form einer Aussparung) integriert, dann ist ohnehin ein Zugriff von oben möglich.

Der erste Aufbewahrungsbereich (für neue ungebrauchte Nadeln) im Wagen ist bevorzugt so dimensioniert, dass lediglich eine Menge von max. 400 bis 500 Nadeln vereinnahmt werden kann. Dies dient einerseits dem Diebstahlschutz (da die Menge für einen Diebstahl üblicherweise nicht lohnend genug ist), der Überschaubarkeit und einem leichteren Zugang zu den Nadeln. Zudem wird eine verbesserte Kostenkontrolle bei der Berechnung der Produktionskosten erreicht, denn die für den Wagen aus dem Hauptlager entnommenen Nadeln beeinflussen direkt die anteiligen Produktionskosten.

Der dritte Aufbewahrungsbereich für die gebrochenen Nadeln enthält in einer bevorzugten Variante eine Einrichtung, die Nadelteile - sollten sie aus den Tüten fallen (d.h., sollten sie sich aus dem Aufbewahrungssystem lösen) - auffängt. Zur Lagerung der Tüten mit den Nadelbruchstücken, z.B. durch Aufkleben auf Aufbewahrungsvordrucken, kann diese Einrichtung durch Hängeordner realisiert werden, in die die Aufbewahrungsvordrucke eingelegt werden können. Um das Führen von Statistiken über das Bruchaufkommen pro Tag zu vereinfachen, können die Tüten nach dem Tag ihrer Einlagerung sortiert abgelegt werden.

Der Wagen kann neben den Aufbewahrungsbereichen noch drei weitere Bereiche mit folgenden Funktionen aufweisen: 1.) Anbringung und Betrieb eines Laptops, 2.) Aufbewahrungsbereich von für das Verfahren benötigte Arbeitsmitteln und 3.) Freibereich, der z.B. für den Einbau einer Batterie genutzt werden kann. Die Batterie kann zur Speisung von Lichtquellen dienen, die bei der Nadelidentifizierung eingesetzt werden, oder zur Versorgung eines elektronischen Alarmsystems eingesetzt werden, das z. B. durch Lampen anzeigt, in welcher Produktionslinie der Wagen benötigt wird.

Alle oben genannten spezifischen Merkmale des Wagens ermöglichen eine unkomplizierte und anforderungsgerechte Durchführung des Qualitätssicherungsverfahrens.

Vorteilhafte Ausgestaltungen des erfindungsgemäßen Überprüfungsverfahrens, des erfindungsgemäßen Behälters sowie der erfindungsgemäßen Verwendung des Wagens ergeben sich aus den abhängigen Ansprüchen und der Beschreibung. Die Beschreibung beschränkt sich auf wesentliche Merkmale der Erfindung. Die Figuren sind ergänzend heranzuziehen. Nachfolgend wird ein Ausführungsbeispiel des erfindungsgemäßen Behälters, des Wagens sowie des erfindungsgemäßen Überprüfungsverfahrens anhand der beigefügten Figuren im Einzelnen erläutert. Es zeigen:
Figur 1 ein Ausführungsbeispiel eines Behälters zur Aufbewahrung von Bruchstücken einer Nadel in perspektivischer Darstellung,
Figur 2 die schematische Darstellung der Bruchstücke einer Nadel,
Figur 3 den Grundkörper des Behälters aus Figur 1 mit Blick auf den offenen Aufnahmeraum,
Figur 4 eine blockschaltbildähnliche Darstellung eines Verfahrens zur Qualitätssicherung beim Nähen eines Textilteils,
Figur 5 eine schematische perspektivische Ansicht eines Ausführungsbeispiels eines Wagens zum Austausch von Nadeln an einer Näh-Arbeitsstation,
Figur 6 ein Nadelbriefchen in Draufsicht,
Figur 7 ein Nadelbriefchen in Seitenansicht,
Figur 8 einen Ausschnitt eines Nadelbogens und
Figur 9 einen Ausschnitt aus einem Dokumentationsblatt mit aufgeklebten Nadelbriefchen.

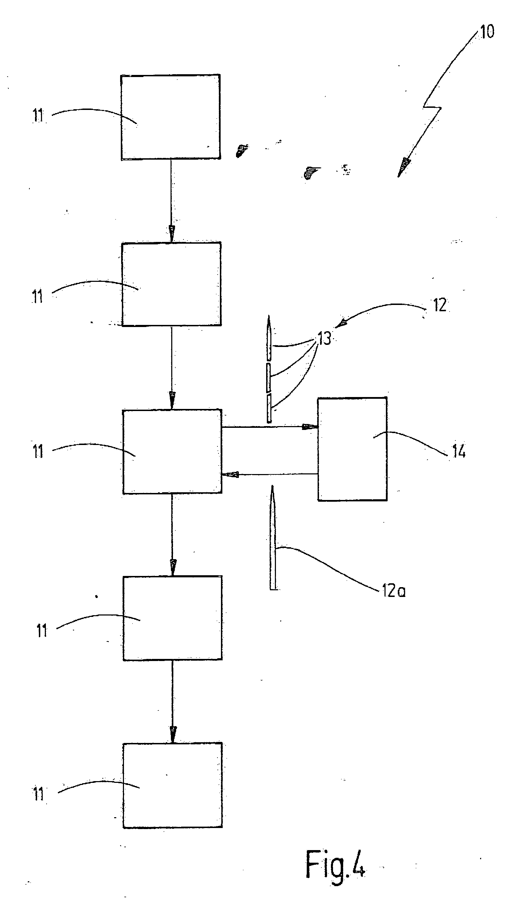

In Figur 4 ist schematisch der Ablauf eines Verfahrens 10 zur Qualitätssicherung beim Nähen eines Textilteils, beispielsweise eines textilen Bekleidungsstücks veranschaulicht. Das Textilteil wird in mehreren Arbeitsstationen 11 hergestellt. Hierfür wird ein textiles Werkstück in einer vorgegebenen Reihenfolge von einer Arbeitsstation 11 zur nächsten Arbeitsstation 11 weitergegeben. Der Nähprozess ist erst beendet, wenn das textile Werkstück alle Arbeitsstationen 11 durchlaufen hat. In jeder Arbeitsstation 11 findet ein Nähvorgang am textilen Werkstück statt, bis schließlich nach Durchlauf aller Arbeitsstationen die Näharbeiten an dem Textilteil abgeschlossen sind.

Jede Arbeitstation 11 verfügt über eine Nähmaschine. An jeder Nähmaschine befindet sich zudem ein Nadelpass für die aktuell verwendete Nähnadel. Ersatznähnadeln sind in den Arbeitsstationen 11 nicht vorhanden. Es soll sichergestellt werden, dass beim Verschleiß, bei einer Beschädigung oder Bruch einer Nadel 12 nicht einfach eine Ersatznähnadel 12a eingesetzt und weitergearbeitet wird. Sondern es muss zunächst sichergestellt werden, dass die schadhafte Nadel oder die Bruchstücke 13 der gebrochenen Nadel 12 aus der Arbeitsstation 11 und insbesondere dem textilen Werkstück entfernt wird bzw. werden.

Beim erfindungsgemäßen Verfahren ist hierfür ein zwischen den Arbeitsstationen 11 bewegbarer Wagen 14 vorhanden. Im Falle des Bruches einer Nadel 12 an einer Arbeitsstation 11 wird der Wagen 14 von einer zentralen Position zwischen den Arbeitsstationen an die betreffende Arbeitsstation 11 bewegt. Der Wagen 14 nimmt die schadhafte Nadel bzw. die Bruchteile 13 der gebrochenen Nadel 12 auf. Nachdem mit Hilfe des Nadelpasses überprüft wurde, um welche Nadel es sich handelt, und sichergestellt wurde, dass alle Bruchstücke 13 der gebrochenen Nadel 12 aus der Arbeitsstation 11 entfernt wurden, werden diese, um sie später zu einer zentralen Sammelstelle zu bringen, zunächst in dem Wagen 14 deponiert. Dann wird aus dem Wagen 14 eine Ersatznähnadel 12a für die Arbeitsstation 11 bereitgestellt. Die an der betroffenen Arbeitsstation 11 arbeitende Person muss daher die Arbeitsstation 11 nicht verlassen. Der Nadelwechsel erfolgt unmittelbar an der Arbeitsstation 11.

Der zu verwendende Nadeltyp ist für jede Arbeitsstation 11 vorgegeben. Beispielsweise kann eine Kennzeichnung an der Arbeitsstation 11 mittels des im Verfahren beschriebenen Nadelpasses oder an der Nähmaschine vorhanden sein. Beim Austausch der Nadel im Falle einer Beschädigung oder eines Bruches ist daher sofort und eindeutig feststellbar, welche Ersatznadel 12a an die Arbeitsstation 11 ausgegeben werden muss.

Zur Aufnahme der Bruchstücke 13 der gebrochenen Nadel 12 ist an der Arbeitsstation und/oder im Wagen 14 zumindest ein Behälter 20 vorhanden. Jeder Behälter 20 weist einen Aufnahmeraum 21 für die Bruchstücke 13 auf, der durch einen Grundkörper 22 und einen Deckel 23 begrenzt wird. Der Deckel 23 ist zwischen einer den Aufnahmeraum 21 abschließenden Schließstellung und einer den Aufnahmeraum 21 zumindest teilweise freigebenden Offenstellung bewegbar. Jeder Behälter 20 ist nur zur Aufnahme der Bruchstücke 13 einer einzigen Nadel 12 vorgesehen. Nach dem Anordnen dieser Bruchstücke 13 in den Aufnahmeraum 21 wird der Deckel 23 in seine Schließstellung bewegt. Es kann mithilfe des Behälters 20 geprüft und sichergestellt werden, dass alle Bruchteile 13 der Nadel 12 gefunden und aus der Arbeitsstation 11 entfernt wurden.

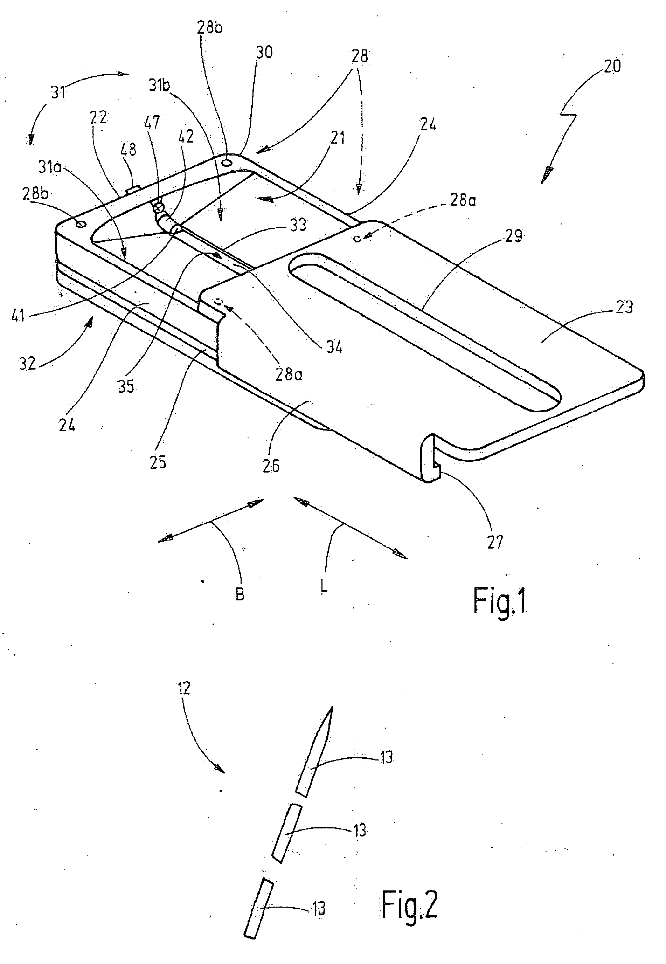

Einen Behälter 20, der für den Einsatz in dem Überprüfungsverfahren 10 besonders geeignet ist, veranschaulicht Figur 1. Dieser Behälter 20 eignet sich zum Aufnehmen der Bruchstücke 13 einer Nadel 12, beispielsweise einer Maschinennähnadel, wie sie im Überprüfungsverfahren 10 eingesetzt wird, ist jedoch auch für andere Maschinennadeln grundsätzlich geeignet. Eventuell muss die Abmessung des Behälters 20 an die Größe der Nadel 12 angepasst werden.

Der Deckel 23 ist im Ausführungsbeispiel bewegbar am Grundkörper 22 gelagert. Hierfür sind an zwei entgegengesetzten Längsseiten 24 des Grundkörpers 22 jeweils eine sich in Längsrichtung L erstreckende Führungsnut 25 vorhanden. Jeder Führungsnut 25 ist ein Seitenflansch 26 mit einem Führungsvorsprung des Deckels 23 zugeordnet. In jede Führungsnut 25 greift ein Führungsvorsprung 27 ein. Die Führungsnut 25 und der Führungsvorsprung 27 sind beim Ausführungsbeispiel im Querschnitt rechteckförmig.

Der Deckel 23 lässt sich mithin in Längsrichtung L entlang des Grundkörpers 22 zwischen seiner Schließstellung und seiner Offenstellung verschieben. Alternativ hierzu wäre es auch möglich, den Deckel 23 über Gelenke schwenkbar am Grundkörper 22 anzuordnen und den Deckel 23 zwischen der Offen- und Schließstellung in einer Schwenkbewegung zu bewegen. Am Deckel 23 und dem Grundkörper 22 ist ein Haltemittel 28 vorhanden, das den Deckel 23 am Grundköper 22 in seiner Schließstellung hält bzw. sichert. Das Haltemittel 28 kann als Rastmittel ausgeführt sein. Bei dem hier dargestellten Ausführungsbeispiel weist das Haltemittel wenigstens eine Rastnoppe 28a am Deckel 23 und/oder am Grundkörper 22 und jeweils eine zugeordnete Rastaussparung 28b am jeweils anderen Behälterteil auf. Beispielsgemäß sind an der dem Grundkörper 22 zugewandten Seite des Deckels 23 Rastnoppen 28a vorhanden, die jeweils einer Rastaussparung 28b am Grundkörper 22 zugeordnet sind. In der Schließstellung greifen die Rastnoppen 28a in die Rastaussparungen 28b ein, um den Deckel 23 in seiner Schließstellung zu halten und ein versehentliches Öffnen zu vermeiden.

Der Deckel 23 kann teilweise oder vollständig aus transparentem Material bestehen, so dass in der Schließstellung des Deckels 23 der Einblick in den Aufnahmeraum 21 möglich ist. Beispielsweise kann im Bereich des Deckels 23 ein transparentes Sichtfenster vorhanden sein. Bei dem in Figur 1 dargestellten Ausführungsbeispiel ist ein solches Sichtfenster als Lupenteil 29 ausgestaltet. Dadurch lassen sich die Bruchstücke 13 der im Aufnahmeraum 21 vorhandenen Nadel 12 vergrößert und mithin genauer betrachten. Es lässt sich dabei leichter entscheiden, ob zwei Bruchstücke 13 unmittelbar aneinander anschließen. Hierfür können die Bruchflächen bzw. Bruchkanten durch das Lupenteil 29 genauer betrachtet werden.

In Abwandlung zu dem in Figur 1 dargestellten Ausführungsbeispiel könnten auch zusätzlich zum Lupenteil 29 weitere Teile oder der gesamte Deckel 23 aus transparentem Material hergestellt sein.

Der Aufnahmeraum 21 ist beim Ausführungsbeispiel als Vertiefung im Grundkörper 22 ausgeführt. Der Grundkörper 22 weist einen dem Deckel 23 zugeordneten ringsumlaufenden Rand 30 auf, wobei der Deckel 23 in seiner Schließstellung vorzugsweise ringsumlaufend am Rand 30 anliegt und den Aufnahmeraum 21 dadurch verschließt. Eine Bodenfläche 31 des Grundkörpers 22 ist dem Aufnahmeraum 21 zugewandt. Sie weist einen ersten Flächenabschnitt 31a und einen zweiten Flächenabschnitt 31b auf. Die beiden Flächenabschnitte 31a, 31b sind durch eine an einem Boden 32 angeordnete und beim Ausführungsbeispiel die Bodenfläche 31 durchsetzende Nut 33 voneinander getrennt. Ausgehend von der Nut 33 verlaufen die beiden Flächenabschnitte 31a, 31b schräg nach oben zu dem sich in Längsrichtung L erstreckenden Abschnitt des Randes 30 hin. Ein Bruchstück 13, das auf einem Flächenabschnitt 31a, 31b der Bodenfläche 31 abgelegt wird, rutscht durch deren Neigung zur Nut 33 hin.

Die Nut 33 erstreckt sich beispielsgemäß in Längsrichtung L vorzugsweise durch den gesamten Aufnahmeraum 21. Die Nut 33 dient zum Anordnen eines Haltemagneten 34 am Grundkörper 22. Die Querschnittsform der Nut 33 ist an die Querschnittsform des Haltemagneten 34 angepasst. Vorzugsweise füllt der Haltemagnet 34 die Nut 33 zumindest in Breitenrichtung B quer zur Längsrichtung im Wesentlichen vollständig aus. Eine an den Aufnahmeraum 21 angrenzende Oberseite 35 des Haltemagneten 34 schließt an die beiden Flächenabschnitte 31a, 31b der Bodenfläche 31 des Grundkörpers 22 an. Der Übergang zwischen den Flächenabschnitten 31a, 31b und der Oberseite 35 kann stufenlos erfolgen. Beim Ausführungsbeispiel besteht eine kleine Stufe zwischen der Oberseite 35 und den Flächenabschnitten 31a, 31b. Es ist von Vorteil, wenn der Haltemagnet 34 zumindest nicht aus der Nut 33 herausragt, so dass Bruchstücke 13 über die Flächenabschnitte 31a, 31b auf die Oberseite 35 des Haltemagneten 34 rollen oder rutschen können.

Sofern der Deckel 23 ein transparentes Sichtfenster und/oder ein Lupenteil 29 aufweist, kann sich dieses in der Schließstellung des Deckels 23 oberhalb des Haltemagneten 34 befinden.

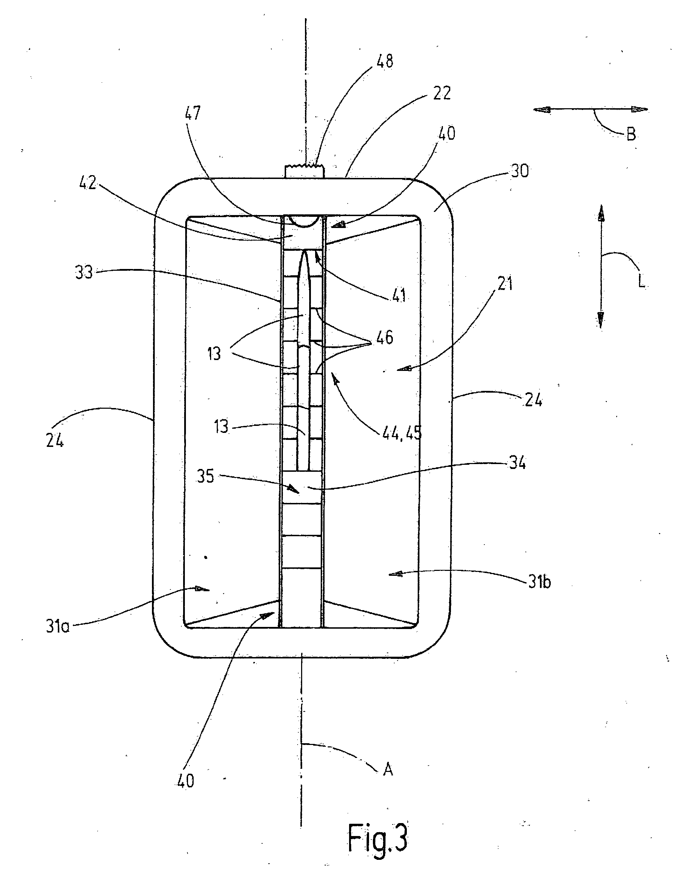

Der Haltemagnet 34 ist ein aus einer Samarium-Kobald Legierung bestehender Permanentmagnet. Sein Magnetfeld durchsetzt zumindest einen Teil des Aufnahmeraums 21. In den Aufnahmeraum 21 gelegte magnetisierbare Bruchstücke 13 einer Nadel 12 werden durch das Magnetfeld erfasst und angezogen. Der Haltemagnet 34 erstreckt sich entlang einer Achse A in Längsrichtung L (Figur 3). Im Bereich eines der beiden axialen Enden 40 des Haltemagneten 34 befindet sich eine Anschlagfläche 41, die beim Ausführungsbeispiel rechtwinklig von der Oberseite 35 des Haltemagneten 34 wegragt. Die Anschlagfläche 41 ist an einem Anschlagteil 42 des Grundkörpers 22 vorhanden, das in Figur 1 zu erkennen ist. Die Form des Anschlagteils 42 ist grundsätzlich beliebig wählbar. Bei dem in Figur 1 dargestellten Ausführungsbeispiel ist das Anschlagteil 42 in etwa halbzylindrisch ausgeführt. Die Breite des Anschlagteils 42 in Breitenrichtung B quer zur Längsrichtung L gemessen entspricht der Breite der Nut 33 und/oder der Oberseite 35 des Haltemagneten 34.

Wie in Figur 3 veranschaulicht, ist im Aufnahmeraum 21 außerdem eine Markierung 44 und beispielsgemäß eine Skala 45 mit wenigstens einer und beispielsgemäß mehreren Skalenelementen 46 angeordnet. Die Skalenelemente 46 sind beispielsgemäß als Skalenstriche ausgeführt. Die Markierung 44 ist im Bereich der Achse A in Längsrichtung L erstreckt. Die Markierung umfasst Skalenelemente 46, die in vorgegebenen Abständen (in Längsrichtung L) gegenüber der Anschlagfläche 41 vorhanden sind. Die dienen dazu, die Länge der Bruchstücke 13 einer Nadel 12 und insbesondere die Gesamtlänge aller im Aufnahmeraum 21 angeordneten Bruchstücke 13 schnell mit der bekannten Länge der unbeschädigten Nadel 12 vergleichen zu können. Insbesondere ist jeweils ein Skalenelement 46 im Abstand der Länge jeder verwendeten Nadel 12 im Aufnahmeraum 21 angebracht.

Bei dem hier dargestellten Ausführungsbeispiel befindet sich die als Skala 45 ausgeführte Markierung 44 unmittelbar auf der Oberseite 35 des Haltemagneten 34. Alternativ oder zusätzlich könnten die Markierung 44 auch an der Bodenfläche 31 benachbart zum Haltemagneten 34 vorgesehen sein. Anstelle einer Skala 45 könnte auch eine beliebige andere Markierung 44 im Aufnahmeraum 21 vorhanden sein. Beispielsweise könnte als Markierung 44 auch eine zeichnerische formgetreue Darstellung der Nadel dienen, so dass durch Längen und/oder Formvergleich schnell erkannt werden kann, ob sämtliche Bruchstücke 13 der Nadel 12 vorhanden sind.

Bricht eine Nadel, insbesondere eine Maschinennähnadel ab, so werden die Bruchstücke 13 der gebrochenen Nadel 12 (Figur 2) häufig unter Zuhilfenahme eines Magnetbesens und/oder einem Magnetstifts eingesammelt und in den Aufnahmeraum 21 des Behälters 20 eingelegt. Die Bruchstücke 13 werden vorzugsweise anhand der Bruchstellen so aneinander gelegt, wie es der ursprünglichen und gebrochenen Nadel 12 entspricht. Ein Ende eines Bruchstücks 13, beispielsweise die Nadelspitze oder das Schaftende der Nadel 12, werden dabei an die Anschlagfläche 41 angelegt (Figur 3). Daran schließen sich die weiteren Bruchstücke 13 geordnet in der Reihenfolge an, wie sie ursprünglich miteinander verbunden waren, was anhand der Bruchstellen und der Form der Bruchstücke festgestellt werden kann. Über die Markierung 44 kann sofort die Gesamtlänge und/oder die Form aller angeordneten Bruchstücke 13 erfasst werden. Zumindest lässt sich die Gesamtlänge bzw. die Form der Bruchstücke 13 mit der bekannten Gesamtlänge bzw. Form der unbeschädigten Nadel 12 vergleichen.

Dadurch kann sehr schnell erfasst werden, ob alle Bruchstücke 13 der gebrochenen Nadel 12 gefunden und in den Behälter 20 eingelegt wurden. Ist dies der Fall, werden alle Bruchstücke 13 in eine Tüte eingelegt und die Tüte wird zugeklebt. Die Tüte kann nach dem Zukleben nicht mehr zerstörungsfrei geöffnet werden. Auf diese Weise soll sichergestellt werden, dass alle gefundenen Nadelbruchstücke 13 zunächst in der zur Dokumentation dienenden Ablage untergebracht und später zum Recycling die Fabrik verlassen. Hierfür werden die Nadelbruchstücke 13 einfach aus der Tüte entnommen, d.h., die Bruchstücke können (getrennt von der Tüte) einem Recycling zugeführt werden. Die Tüte, die in Form eines Aufbewahrungsvordrucks bereitgestellt wird, spielt eine wesentliche Rolle bei der Durchführung des Qualitätssicherungsverfahrens.

Bei der bislang üblichen Methode, bei der die Nadelbruchstücke 13 auf einem Klebefilm aufgeklebt werden, haften die Nadelbruchstücke 13 üblicherweise so stark am Klebefilm, dass sie nur mit unverhältnismäßig hohem Aufwand vom Klebefilm getrennt werden könnten. Die Nadelbruchstücke werden deshalb am Klebefilm belassen, wodurch ein Recycling unmöglich oder zumindest wesentlich erschwert wird.

Der Nadeltausch wird dokumentiert und die Tüte mit den Bruchstücken gemeinsam mit der Dokumentation für den Fall einer möglichen Überprüfung durch den Auftraggeber des textilen Werkstücks üblicherweise bis zu 6 Monate lang aufbewahrt. Der Herstellungsprozess kann dann mit einer Ersatznähnadel 12a fortgesetzt werden, da alle Bruchstücke 13 aus dem bearbeiteten textilen Werkstück entfernt wurden.

Im Aufnahmeraum 21 des Behälters 20 kann auch eine batteriegespeiste Lichtquelle 47 angeordnet sein, um genügend Licht für die Betrachtung der Bruchstücke 13 zu haben.

Ein bei geschlossenem Deckel 23 zugänglicher Schalter 48 kann zum Ein- und Ausschalten der Lichtquelle 47 dienen. Die Batterie zum Betreiben der Lichtquelle kann beispielsweise im Grundkörper 22 angeordnet sein. Die Lichtquelle 47 und der Schalter 48 sind in Figuren 1 und 3 beispielhaft stark schematisiert dargestellt. Als Lichtquelle 47 kann beispielsweise eine Leuchtdiode dienen. Es können im Aufnahmeraum 21 auch an verschiedenen Stellen Lichtquellen 47 angeordnet werden.

In den Fällen, in denen Bruchstücke 13 einer gebrochenen Nadel 12 an der Arbeitsstation 11 nicht gefunden werden, ist der Transport des textilen Werkstücks zu einem Nadeldetektorraum notwendig. Beim erfindungsgemäßen Verfahren wird hierfür ein abschließbarer Container verwendet. Dadurch wird verhindert, dass Bruchteile 13 beim Transport des textilen Werkstücks verloren werden. Der Boden des Containers ist vorzugsweise schwarz, um ein leichteres Erkennen von Bruchteilen 13 zu ermöglichen. Vorzugsweise ist der Container außerdem mit einem Magnetbesen ausgestattet, der u.a. auch dazu dient, den Innenraum bzw. den Boden des Containers nach Bruchteilen 13 abzusuchen. Dies verhindert, dass Bruchstücke 13 im Container verbleiben und das vom Nadeldetektorraum an die Arbeitsstation 11 zurücktransportierte textile Werkstück möglicherweise erneut mit einem Bruchteil 13 kontaminiert wird.

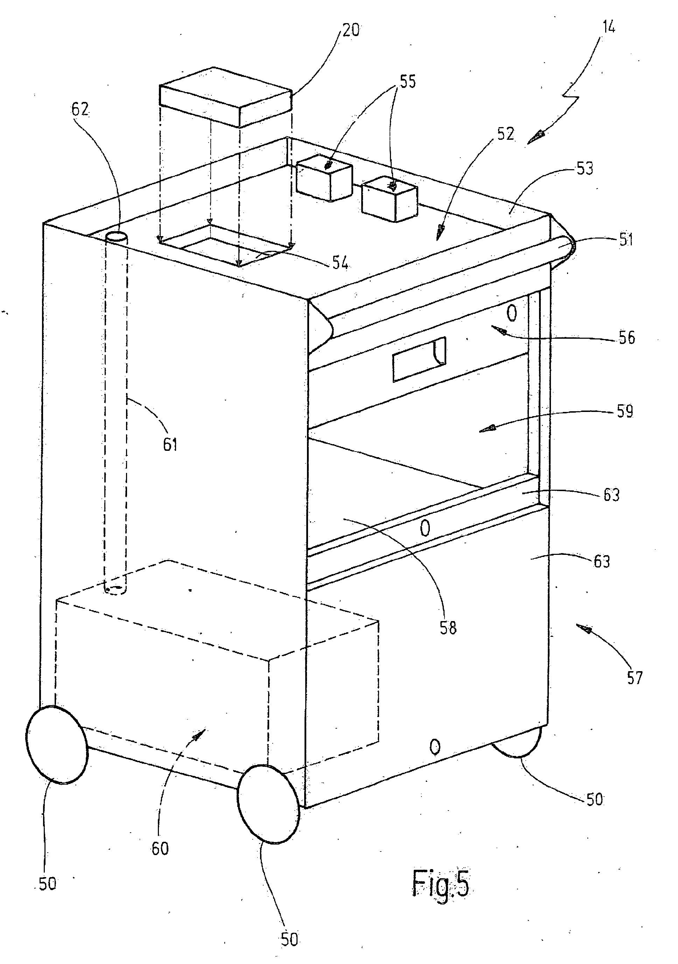

In Figur 5 ist schematisch eine perspektivische Darstellung des Wagens 14 veranschaulicht. Der Wagen 14 weist im Bereich seines Bodens feststehende und/oder um eine Hochachse schwenkbare Rolle 50 auf. Mithilfe dieser Rollen 50 kann der Wagen 14 geschoben werden. Beim Ausführungsbeispiel handelt es sich um einen manuell bewegbaren Wagen 14. Zum Schieben weist dieser im Bereich seiner Oberseite einen Griff 51 auf. Die Oberseite des Wagens 14 weist eine Arbeitsfläche 52 auf oder ist durch eine solche Arbeitsfläche 52 gebildet. Die Arbeitsfläche 52 ist dunkel und vorzugsweise schwarz, um die feinen, silbrig hellen Bruchstücke 13 bzw. Nadeln 12 besser erkennen zu können. Die Arbeitsfläche 52 ist beim Ausführungsbeispiel von einem ringsumlaufenden Rand 53 umschlossen, so dass keine Bruchstücke 13 oder Nadeln 12 versehentlich von der Arbeitsfläche 52 herunterfallen können.

Im Bereich der Arbeitsfläche 52 des Wagens 14 ist beim dargestellten Ausführungsbeispiel außerdem eine Vertiefung 54 vorhanden, die zur zumindest teilweisen Aufnahme eines Behälters 20 dient. Über die Vertiefung 54 kann der Behälter 20 sozusagen gegen Verrutschen auf der Arbeitsfläche 52 gesichert werden. Anstelle der Vertiefung 54 könnten auch andere Mittel, wie Vorsprünge oder dergleichen zur Anordnung des Behälters 20 auf der Arbeitsfläche 52 dienen.

Auf der Arbeitsfläche 52 können außerdem weitere Behältnisse 55 vorhanden sein, die beispielsweise verschließbare Tüten enthalten, in denen Bruchstücke zur Aufbewahrung und Dokumentation des Nadeltauschs gelagert werden können. Außerdem kann ein Behältnis 55 zur Aufnahme von Müll dienen. Beispielsweise können die Tüten einen selbstklebenden Falz aufweisen, der durch eine Folie oder einen Streifen abgedeckt ist. Nach dem Freilegen dieses selbstklebenden Falzes vor dem Zukleben der Tüte bleibt die Folie oder der Streifen übrig, der in das entsprechende Behältnis 55 eingeworfen werden kann.

Im Innenraum des Wagens 14 ist außerdem eine Schublade 56 angeordnet, die von der Vorderseite 57 des Wagens 14 her zugänglich ist. Der Wagen 14 ist damit besonders für den Einsatz in Betrieben geeignet, bei denen die Gänge zwischen den aus den Arbeitsstationen 11 gebildeten Produktionslinien relativ schmal sind, d.h. für Einsätze, bei denen ein 90°-Winkel zwischen dem Zugang zum Inhalt des Wagens und den Seitenteilen des Wagens empfohlen ist. Alternativ kann sich, wenn der Wagen 14 für den Einsatz in Betrieben vorgesehen ist, bei denen die Gänge zwischen den Produktionslinien relativ breit sind, abhängig von der Positionierung des Wagens zwischen den Arbeitsstationen 11, der Zugang zum Inhalt des Wagens 14 entweder im linken oder rechten Seitenteil des Wagens 14 befinden. In der Schublade 56 befinden sich ungebrauchte neue Nadeln 12, also Ersatznähnadeln 12a. Die Schublade 56 stellt somit beispielsgemäß einen ersten Aufbewahrungsbereich des Wagens 14 dar. Die Schublade 56 ist vorzugsweise abschließbar. Dadurch kann der Zugang zu Ersatznähnadeln 12a durch Unbefugte vermieden und eine vollständige Dokumentation über jeden Nadeltausch sichergestellt werden.

Der Innenraum des Wagens 14 ist durch einen Zwischenboden 58 unterteilt. In einem oberen Bereich 59 oberhalb des Zwischenbodens 58 des Innenraums können weitere Gegenstände angeordnet werden, zum Beispiel eine Schreibunterlage bzw. ein Klemmbrett, Schreibutensilien oder dergleichen. Außerdem dient dieser obere Bereich 59 dazu, in verschlossenen Tüten aufbewahrte Bruchstücke 13 und die Dokumentation über den Nadeltausch aufzubewahren. Dieser Bereich 59 bildet einen dritten Aufbewahrungsbereich des Wagens 14. Unterhalb des Zwischenbodens 58 ist beispielsgemäß der zweite Aufbewahrungsbereich des Wagens 14 vorhanden und insbesondere durch einen Aufbewahrungsbehälter 60 für gebrauchte, verschlissene oder beschädigte, aber nicht gebrochene Nadeln gebildet. Dieser Aufbewahrungsbehälter 60 ist über einen Schacht oder Kanal, beispielsweise ein Rohr 61 mit der Arbeitsfläche 52 verbunden. Dort ist eine Mündung 62 des Schachtes bzw. Rohres 61 vorhanden. Gebrauchte, beschädigte und nicht gebrochene Nadeln können durch die Mündung 62 an der Arbeitsfläche 52 über das Rohr 61 in den Aufbewahrungsbehälter 60 eingeworfen werden.

An der Vorderseite 57 des Wagens 14 befindet sich wenigstens eine Tür zum Verschließen des Innenbereichs des Wagens 14. Beim Ausführungsbeispiel sind zwei versetzt angeordnete Schiebetüren 63 vorhanden. Die Schiebetüren 63 sind beispielsgemäß vertikal verschiebbar hintereinander angeordnet. Abhängig von der Stellung der beiden Schiebetüren 63 ist entweder der obere Bereich 59 des Innenraums oberhalb des Zwischenbodens 58 oder der darunterliegende Bereich mit dem Aufbewahrungsbehälter 60 für gebrauchte, jedoch nicht gebrochene Nadeln zugänglich. Dadurch ist sichergestellt, dass entweder neue Nadeln aus der Schublade 56 oder gebrauchte Nadeln zur Überführung ins Recycling aus dem Aufnahmeraum 60 entnommen werden können. Ein gleichzeitiger Zugang zur Schublade 56 und dem Aufbewahrungsbehälter 60 ist durch die beiden Schiebetüren 63 vermieden. Dies hat den Vorteil, dass ein versehentliches Vertauschen von neuen und gebrauchten, ungebrochenen Nadeln nicht möglich ist.

Zum Tausch einer gebrochenen Nadel gegen eine Ersatznähnadel 12a wird mithilfe des Nadelpasses zunächst festgestellt, um welche Nadeltype es sich handelt, und anschließend mithilfe des Behälters 20 und insbesondere der darin angeordneten Markierung 44 geprüft, ob sämtliche Bruchstücke 13 vorhanden sind. Ist dies der Fall, wird aus einem Behältnis 55 eine Tüte entnommen und die Bruchstücke 13 darin angeordnet. Anschließend wird die Tüte über einen selbstklebenden Falz verschlossen und lässt sich dann nicht mehr zerstörungsfrei öffnen. Diese Tüte wird zu Dokumentationszwecken auf ein Dokumentationsblatt aufgeklebt und im oberen Bereich 59 verstaut. Anschließend kann eine Ersatznadel 12a aus der Schublade 56 entnommen und an die Arbeitsstation 11 übergeben werden. Ist eine Nadel 12 nicht gebrochen, sondern lediglich verschlissen, aber vollständig wird diese über die Mündung 62 in den Aufbewahrungsbehälter 60 eingeworfen und anschließend aus der Schublade 56 eine neue Nähnadel entnommen und als Ersatznähnadel 12a an die Arbeitsstation 11 übergeben. Über den Wagen 14 lassen sich daher gebrochene bzw. beschädigte und nicht gebrochene bzw. neue Nadeln strikt voneinander trennen.

In bzw. an dem Wagen 14 kann außerdem ein Magnetbesen, mit dem die Bruchstücke unkompliziert vom Boden aufgesammelt werden können und/oder ein Magnetstift zum Auffinden und Entfernen der Bruchstücke 13 aus der Arbeitsstation bzw. dem textilen Werkstück vorhanden sein.

Die Erfindung betrifft ein Überprüfungsverfahren 10, das zur Qualitätssicherung beim Nähen eines Textilteils dient. Das Nähen erfolgt sequenziell in mehreren Arbeitsstationen 11. Ein Wagen 14 ist vorgesehen, der zwischen den Arbeitsstationen 11 bewegbar ist. Bricht eine Nadel 12 in einer Arbeitsstation 11 ab, wird der Wagen 14 an diese Arbeitsstation 11 bewegt. Die Bruchteile 13 der Nadel 12 werden in einem Behälter 20 angeordnet und der Behälter wird an den Wagen 14 übergeben. Wenn festgestellt wurde, dass alle Bruchteile 13 aus der Arbeitsstation 11 entfernt wurden, wird eine Ersatznähnadel 12a aus dem Wagen 14 entnommen und für diese Arbeitsstation bereitgestellt. Außerdem betrifft die Erfindung einen Behälter 20 zur Aufnahme der Bruchteile 13 der Nadel 12. Der Behälter 20 weist einen Aufnahmeraum 21 auf, der von einem Grundkörper 22 und einem Deckel 23 begrenzt ist. Im Bereich eines Bodens 32 des Grundkörpers 22 ist ein sich entlang einer Achse A erstreckender Haltemagnet 34 angeordnet. Über dessen Magnetfeld werden magnetisierbare Bruchteile 13 einer Nadel 12 im Bereich der Achse A im Aufnahmeraum 21 gehalten.

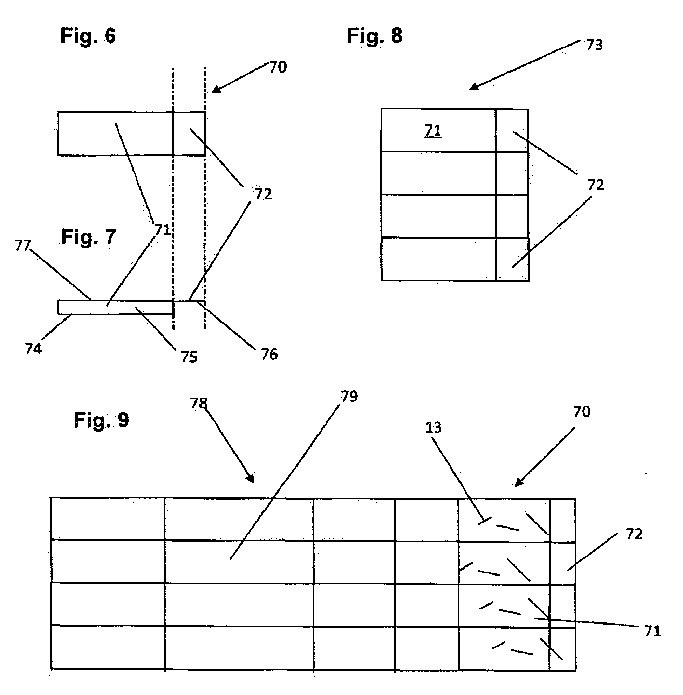

Die Figuren 6 und 7 zeigen ein Nadelbriefchen 70 mit einem Hauptabschnitt 71 und einem Laschenabschnitt 72, die beide Bestandteil desselben rechteckförmigen Abschnitts aus transparenter Kunststofffolie sind. Auf der einen Oberfläche/Seite des Nadelbriefchens 70 befindet sich die Aufsatzfolie 74, die durchgängig auf allen Seiten, bis auf die dem Laschenabschnitt 72 zugewandte Seite, mit dem Hauptabschnitt 71 verschweißt ist, und der erste Klebeabschnitt 76, der auf dem Laschenabschnitt 72 angeordnet ist. Durch den Hauptabschnitt 71 und die Aufsatzfolie 74 ist eine Tüte 75 gebildet, die auf der dem Laschenabschnitt 72 zugewandten Seite offen ist. Die Tüte 75 kann mit dem Laschenabschnitt 72 unter Verwendung des ersten Klebeabschnitts 76 verschlossen werden. Auf der Rückseite zumindest des Hauptabschnitts befindet sich eine zweite Klebefläche 77, die zum Aufkleben des Nadelbriefchens 70 auf einem Blatt - vorzugsweise dem nachstehend erwähnten Dokumentationsblatt 78 - gedacht ist.

In Fig. 8 ist ein Ausschnitt aus einem Nadelbriefbogen 73 dargestellt, der mehrere Nadelbriefchen 70 enthält bzw. aus diesen besteht.

Fig. 9 zeigt ein Dokumentationsblatt 77, auf das mehrere Nadelbriefchen 70 aufgeklebt sind und in das Informationen wie das Datum, die Zeit, die betroffene Arbeitsstation (Maschine), die Produktionslinie, die an der Arbeitsstation arbeitende Person (Operator) und die Teilenummer der gebrochenen Nadel in dafür vorgesehene Informationsfelder 79 eingetragen werden können.

### Bezugszeichenliste:

- 10: Überprüfungsverfahren
- 11: Arbeitsstation
- 12: Nadel
- 12a: Ersatznähnadel
- 13: Bruchstück
- 14: Wagen
- 20: Behälter
- 21: Aufnahmeraum
- 22: Grundkörper
- 23: Deckel
- 24: Längsseite des Grundkörpers
- 25: Führungsnut
- 26: Seitenflansch
- 27: Führungsvorsprung
- 28: Haltemittel
- 28a: Rastnoppe
- 28b: Rastaussparung
- 29: Lupenteil
- 30: Rand am Grundkörper
- 31: Bodenfläche
- 31a: erster Flächenabschnitt
- 31b: zweiter Flächenabschnitt
- 32: Boden des Grundkörpers
- 33: Nut
- 34: Haltemagnet
- 35: Oberseite
- 40: axiales Ende des Haltemagneten
- 41: Anschlagfläche
- 42: Anschlagteil
- 44: Markierung
- 45: Skala
- 46: Skalenelement
- 47: Lichtquelle
- 48: Schalter
- 50: Rolle
- 51: Griff
- 52: Arbeitsfläche
- 53: Rand
- 54: Vertiefung
- 55: Behältnis
- 56: Schublade
- 57: Vorderseite
- 58: Zwischenboden
- 59: oberer Bereich
- 60: Aufbewahrungsbehälter
- 61: Rohr
- 62: Mündung
- 70: Nadelbriefchen
- 71: Hauptabschnitt
- 72: Laschenabschnitt
- 73: Nadelbriefbogen
- 74: Aufsatzfolie
- 75: Tüte
- 76: erster Klebeabschnitt
- 77: zweiter Klebeabschnitt
- 78: Dokumentationsblatt
- 79: Informationfeld
- A: Achse
- B: Breitenrichtung
- L: Längsrichtung

## Patentansprüche

1. Verfahren zur Überprüfung, ob sämtliche Bruchstücke (13) einer gebrochenen Nadel (12) in einem Behälter (20) vorhanden sind, indem in einem durch einen Grundkörper (22) und einen Deckel (23) begrenzten Aufnahmeraum (21) des Behälters (20), die Bruchstücke (13) der gebrochenen Nadel (12) mittels eines Haltemagneten (34) ausgerichtet im Aufnahmeraum (12) angeordnet werden.

2. Verfahren nach Anspruch 1, **dadurch gekennzeichnet, dass** in einem ersten Schritt überprüft wird, ob sämtliche Bruchstücke (13) der gebrochenen Nadel (12) in dem Behälter (20) vorhanden sind, und erst wenn bestätigt wurde, dass die ausgetauschte Nadel (12) vollständig ist und keine Bruchstücke in der Arbeitsstation, in der die Nadel eingesetzt wurde, oder dem Werkstück, dass mit der Nadel bearbeitet wurde, zurückgeblieben sind, eine Ersatz-Nähnadel (12a) für die Arbeitsstation (11) freigegeben wird.

3. Verfahren nach einem der Ansprüche 1 und 2, **dadurch gekennzeichnet, dass** in jedem Behälter (20) nur die Bruchstücke (13) einer einzigen Nadel (12) angeordnet werden.

4. Behälter (20) zur Durchführung des Verfahrens nach einem der Ansprüche 1 bis 3,
mit einem Grundkörper (22) und einem Deckel (23), durch die ein Aufnahmeraum (21) begrenzt wird,
mit einem am Grundkörper (22) angebrachten Haltemagneten (34), wobei der Aufnahmeraum (21) so eingerichtet ist, dass durch ein ausgerichtetes Anordnen der Bruchstücke (13) einer gebrochenen Nadel (12) am Haltemagneten (34) festgestellt werden kann, ob sämtliche Bruchstücke (13) der gebrochenen Nadel (12) im Behälter (20) vorhanden sind.

5. Behälter nach Anspruch 4, **dadurch gekennzeichnet, dass** die Stärke des Haltemagneten so groß gewählt ist, dass am Haltemagneten angeordnete Nadelbruchstücke auch dann sicher am Haltemagneten festgehalten werden, wenn der Behälter aus einer Höhe von maximal 1,50 m fällt, wobei zumindest die Oberfläche der Seite des Haltemagneten, die für ein gerichtetes Anordnen der Nadelbruchstücke vorgesehen ist, derart beschaffen ist, dass zwischen am Haltemagneten angeordneten Bruchstücken und dem Haltemagneten eine so geringe Haftreibung auftritt, dass die betreffenden Bruchstücke auf der Oberfläche verschoben werden können, ohne sich vom Haltmagneten zu lösen.

6. Behälter nach Anspruch 4, **dadurch gekennzeichnet, dass** sich der Haltemagnet (34) entlang einer Achse (A) am Boden (32) des Grundkörpers (22) erstreckt.

7. Behälter nach Anspruch 4, **dadurch gekennzeichnet, dass** der Haltemagnet (34) in einer Nut (33) des Grundkörpers (22) angeordnet ist, die auf der dem Aufnahmeraum (21) zugewandten Seite offen ist.

8. Behälter nach Anspruch 5 oder 6, **dadurch gekennzeichnet, dass** die dem Aufnahmeraum (21) zugewandte Bodenfläche (31) des Grundkörpers (22) zum Haltemagneten (34) hin nach unten geneigt verläuft.

9. Behälter nach einem der vorhergehenden Ansprüche,
**dadurch gekennzeichnet, dass** entlang der Achse (A) zumindest an einer Stelle (40) eine Anschlagfläche (41) vorhanden ist.

10. Behälter nach einem der vorhergehenden Ansprüche, **dadurch gekennzeichnet, dass** im Aufnahmeraum (21) eine Markierung (44) angeordnet ist, die zur Prüfung dient, ob sich alle Bruchstücke (13) im Behälter befinden.

11. Behälter nach Anspruch 9, **dadurch gekennzeichnet, dass** es sich bei der Markierung (44) um eine Skala (45) und/oder eine zeichnerische Darstellung der Nadel (12) handelt.

12. Behälter nach Anspruch 9 oder 10 und Anspruch 4 oder 5, **dadurch gekennzeichnet, dass** die Markierung (44) unmittelbar in Richtung der Achse (A) an der Anschlagfläche (41) anschließt.

13. Behälter nach einem der Ansprüche 9 bis 11, **dadurch gekennzeichnet, dass** die Markierung (44) an der dem Aufnahmeraum (21) zugewandten Oberseite (35) des Haltemagneten (34) und/oder an der dem Aufnahmeraum (21) zugewandten Bodenfläche (31) des Grundkörpers (22) angeordnet ist.

14. Behälter nach einem der vorhergehenden Ansprüche, **dadurch gekennzeichnet, dass** der Deckel (23) zumindest teilweise aus transparentem Material besteht, wobei der Deckel im Bereich über dem Haltemagneten (34) ein Lupenteil (29) aufweist.

15. Verwendung des Behälters (20) nach einem der Ansprüche 4 bis 14 in einem Wagen (14) für den Austausch von beschädigten oder gebrochenen Nadeln (12) gegen eine Ersatznähnadel (12a) an einer Arbeitsstation (11), in der ein Nähvorgang an einem textilen Werkstück durchgeführt wird,
mit einem Innenraum, der einen ersten Aufbewahrungsbereich (56) für Ersatznähnadeln (12a), einen zweiten Aufbewahrungsbereich (60) für gebrauchte, ungebrochene Nadeln (12) und einen dritten Aufbewahrungsbereich (59) für die Bruchstücke (13) einer gebrochenen Nadel (12) aufweist, wobei alle Aufbewahrungsbereiche (56, 59, 60) voneinander getrennt sind.

16. Verwendung des Behälters (20) nach einem der Ansprüche 4 bis 14 in einem Wagen (14) für den Austausch von beschädigten oder gebrochenen Nadeln (12) gegen eine Ersatznähnadel (12a) an einer Arbeitsstation (11), in der ein Nähvorgang an einem textilen Werkstück durchgeführt wird,
mit einem Innenraum, der einen ersten Aufbewahrungsbereich (56) für Ersatznähnadeln (12a), einen zweiten Aufbewahrungsbereich (60) für gebrauchte, ungebrochene Nadeln (12) und einen dritten Aufbewahrungsbereich (59) für die Bruchstücke (13) einer gebrochenen Nadel (12) aufweist, wobei alle Aufbewahrungsbereiche (56, 59, 60) voneinander getrennt sind, und der Wagen über eine Umschalteinrichtung verfügt, die einen gleichzeitigen Zugang zum ersten Aufbewahrungsbereich (56) und zum zweiten Aufbewahrungsbereich (60) verhindert.

## Claims

1. Method for checking whether all fragments (13) of a broken needle (12) are present in a container (20), wherein in an accommodation space (21) of the container (20) delimited by a base body (22) and a cover (23), the fragments (13) of the broken needle (12) are arranged orientedly in the accommodation space (21) by means of a retaining magnet (34).

2. Method according to claim 1, **characterised in that** in a first step it is checked whether all fragments (13) of the broken needle (12) are present in the container (20), and a replacement needle (12a) for the workstation (11) is released only when it has been confirmed that the replaced needle (12) is complete and no fragments remain in the workstation in which needle was used or in the workpiece which was being processed with the needle.

3. Method according to one of claims 1 and 2, **characterised in that** only the fragments (13) of a single needle (12) are arranged in each container (20).

4. Container (20) for performance of the method according to any of claims 1 to 3, with a base body (22) and a cover (23) which delimit an accommodation space (21), with a retaining magnet (34) attached to the base body (22), wherein the accommodation space (21) is configured such that by oriented arrangement of the fragments (13) of a broken needle (12) on the retaining magnet (34), it can be established whether all fragments (13) of the broken needle (12) are present in the container (20).

5. Container according to claim 4, **characterised in that** the strength of the retaining magnet is selected sufficiently large that needle fragments arranged on the retaining magnet can be held securely on the retaining magnet even if the container falls from a height of maximum 1.50 m, wherein at least the surface of the side of the retaining magnet provided for an oriented arrangement of the needle fragments is composed such that the adhesion friction between the fragments arranged on the retaining magnet and the retaining magnet is so low that the fragments concerned can be moved on the surface without becoming detached from the retaining magnet.

6. Container according to claim 4, **characterised in that** the retaining magnet (34) extends along an axis (A) on the base (32) of the base body (22).

7. Container according to claim 4, **characterised in that** the retaining magnet (34) is arranged in a groove (33) of the base body (22) which is open on the side facing the accommodation space (21).

8. Container according to claim 5 or 6, **characterised in that** the base surface (31) of the base body (22) facing the accommodation space (21) runs sloping downward to the retaining magnet (34).

9. Container according to any of the preceding claims, **characterised in that** a stop face (41) is present at least at one point (40) along the axis (A).

10. Container according to any of the preceding claims, **characterised in that** a marking (44) is arranged in the accommodation space (21) which serves to check whether all fragments (13) are present in the container.

11. Container according to claim 9, **characterised in that** the marking (44) is a scale (45) and/or a diagrammatic depiction of the needle (12).

12. Container according to claim 9 or 10 and claim 4 or 5, **characterised in that** the marking (44) is directly adjacent to the stop face (41) in the direction of the axis (A).

13. Container according to any of claims9 to 11, **characterised in that** the marking (44) is arranged on the top side (35) of the retaining magnet (34) facing the accommodation space (21) and/or on the base surface (31) of the base body (22) facing the accommodation space (21).

14. Container according to any of the preceding claims, **characterised in that** the cover (23) is at least partially made of transparent material, wherein the cover has a magnifying glass part (29) in the region above the retaining magnet (34).

15. Use of the container (20) according to any of claims 4 to 14 in a carriage (14) for exchange of damaged or broken needles (12) by a replacement needle (12a) at a workstation (11) in which a stitching process is performed on a textile workpiece, with an interior which has a first storage region (56) for replacement sewing needles (12a), a second storage region (60) for used unbroken needles (12), and a third storage region (59) for the fragments (13) of a broken needle (12), wherein all storage regions (56, 59, 60) are separated from each other.

16. Use of the container (20) according to any of claims 4 to 14 in a carriage (14) for exchange of damaged or broken needles (12) by a replacement needle (12a) at a workstation (11) in which a stitching process is performed on a textile workpiece, with an interior which has a first storage region (56) for replacement sewing needles (12a), a second storage region (60) for used unbroken needles (12), and a third storage region (59) for the fragments (13) of a broken needle (12), wherein all storage regions (56, 59, 60) are separated from each other, and the carriage has a switchover device which prevents simultaneous access to the first storage region (56) and the second storage region (60).

## Revendications

1. Procédé de vérification pour savoir si tous les fragments (13) d'une aiguille (12) brisée sont présents dans un récipient (20), par le fait que dans une chambre de collecte (21) du récipient (20) délimitée par un corps de base (22) et un couvercle (23), les fragments (13) de l'aiguille (12) brisée sont disposés de façon orientée dans la chambre de collecte (12), au moyen d'un aimant de maintien (34).

2. Procédé selon la revendication 1, **caractérisé en ce que** l'on vérifie lors d'une première étape si tous les fragments (13) de l'aiguille (12) brisée se trouvent dans le récipient (20), et que ce n'est qu'une fois confirmé que l'aiguille (12) remplacée est complète et qu'il n'y a plus de fragments dans le poste de travail dans lequel l'aiguille a été utilisée ou dans la pièce qui a été traitée avec l'aiguille, qu'une aiguille à coudre de rechange (12a) est libérée pour le poste de travail (11).

3. Procédé selon l'une des revendications 1 et 2, **caractérisé en ce que** dans chaque récipient (20) sont disposés uniquement les fragments (13) d'une seule aiguille (12).

4. Récipient (20) destiné à la mise en oeuvre du procédé selon l'une des revendications 1 à 3,
comprenant un corps de base (22) et un couvercle (23) qui délimitent une chambre de collecte (21),
comprenant un aimant de maintien (34) disposé sur le corps de base (22), la chambre de collecte (21) étant agencée de manière à ce qu'une disposition orientée des fragments (13) d'une aiguille (12) brisée sur l'aimant de maintien (34) permette de constater si tous les fragments (13) de l'aiguille (12) brisée se trouvent dans le récipient (20).

5. Récipient selon la revendication 4, **caractérisé en ce que** la force de l'aimant de maintien est choisie si grande que des fragments d'aiguille placés sur l'aimant soient maintenus de façon fiable sur l'aimant, même si le récipient tombe d'une hauteur d'au maximum 1,50 m, sachant qu'au moins la surface de la face de l'aimant de maintien qui est prévue pour une disposition orientée des fragments d'aiguille est constituée de manière telle qu'il existe, entre des fragments disposés sur l'aimant de maintien et l'aimant de maintien, un frottement par adhérence si faible que les fragments concernés peuvent être déplacés sur la surface sans se détacher de l'aimant de maintien.

6. Récipient selon la revendication 4, **caractérisé en ce que** l'aimant de maintien (34) s'étend le long d'un axe (A) sur le fond (32) du corps de base (22).

7. Récipient selon la revendication 4, **caractérisé en ce que** l'aimant de maintien (34) est disposé dans une rainure (33) du corps de base (22) qui est ouverte sur le côté tourné vers la chambre de collecte (21).

8. Récipient selon la revendication 5 ou 6, **caractérisé en ce que** la surface de fond (31) du corps de base (22) qui est tournée vers la chambre de collecte (21) s'étend en étant inclinée vers le bas, en direction de l'aimant de maintien (34).

9. Récipient selon l'une des revendications précédentes, **caractérisé en ce que** le long de l'axe (A), une surface de butée (41) est prévue à au moins un emplacement (40).

10. Récipient selon l'une des revendications précédentes, **caractérisé en ce que** dans la chambre de collecte (21), est disposé un repère (44) qui sert à vérifier si tous les fragments (13) se trouvent dans le récipient.

11. Récipient selon la revendication 9, **caractérisé en ce que** le repère (44) est une échelle graduée(45) et/ou une représentation graphique de l'aiguille (12).

12. Récipient selon la revendication 9 ou 10 et la revendication 4 ou 5, **caractérisé en ce que** le repère (44) se situé directement à la suite de la surface de butée (41), dans le sens de l'axe (A).

13. Récipient selon l'une des revendications 9 à 11, **caractérisé en ce que** le repère (44) est placé sur la face supérieure (35) de l'aimant de maintien (34) tournée vers la chambre de collecte (21) et/ou sur la surface de fond (31) du corps de base (22) tournée vers la chambre de collecte (21).

14. Récipient selon l'une des revendications précédentes, **caractérisé en ce que** le couvercle (23) est constitué au moins en partie d'un matériau transparent, le couvercle présentant un élément-loupe (29) dans la région au-dessus de l'aimant de maintien (34).

15. Utilisation du récipient (20) selon l'une des revendications 4 à 14 dans un chariot (14) destiné à remplacer des aiguilles (12) endommagées ou brisées par une aiguille à coudre de rechange (12a) dans un poste de travail (11) dans lequel une opération de couture est exécutée sur une pièce textile,
comprenant un espace interne qui présente une première zone de stockage (56) pour des aiguilles de rechange (12a), une deuxième zone de stockage (60) pour des aiguilles (12) usagées, non brisées, et une troisième zone de stockage (59) pour les fragments (13) d'une aiguille (12) brisée, toutes les zones de stockage (56, 59, 60) étant séparées les unes des autres.

16. Utilisation du récipient (20) selon l'une des revendications 4 à 14 dans un chariot (14) destiné à remplacer des aiguilles (12) endommagées ou brisées par une aiguille à coudre de rechange (12a) dans un poste de travail (11) dans lequel une opération de couture est exécutée sur une pièce textile,
comprenant un espace interne qui présente une première zone de stockage (56) pour des aiguilles à coudre de rechange (12a), une deuxième zone de stockage (60) pour des aiguilles (12) usagées, non brisées, et une troisième zone de stockage (59) pour les fragments (13) d'une aiguille (12) brisée, toutes les zones de stockage (56, 59, 60) étant séparées les unes des autres, et le chariot comportant un dispositif de commutation qui empêche l'accès simultané à la première zone de stockage (56) et à la deuxième zone de stockage (60).
